# NEW EUROPEAN PATENT SPECIFICATION

(11) **EP 1 222 858 B2**
(45) Date of publication and mention of the opposition decision: **16.03.2011**
(45) Mention of the grant of the patent: 07.06.2006
(21) Application number: 02075107.9
(22) Date of filing: 14.01.2002
(51) Int. Cl.: A22C 21/06

(54) **Method and device for processing a cluster of organs of a slaughtered animal**
Verfahren und Vorrichtung zur Bearbeitung des Organ-Pakets eines Schlachttieres
Procédé et dispositif de traitement d'un paquet d'organes d'un animal abattu

(30) Priority: 12.01.2001 NL 1017100
(43) Date of publication of application: 17.07.2002
(73) Proprietor: STORK PMT B.V., 5831 AV Boxmeer (NL)
(72) Inventor: Drabbels, Bastiaan Wilhelmina Johannes Elizeus J., 5821 AJ Vierlingsbeek (NL); van den Nieuwelaar, Adrianus Josephes, 5421 XG Gemert (NL); Halfman, Mark Johan, 7255 MR Hengelo (NL)
(74) Representative: Mertens, Hans Victor

(56) References cited:
- EP-A- 0 497 014
- EP-A- 0 587 253
- EP-B- 0 530 868
- WO-A-01/52659
- WO-A-96/16553
- US-A- 6 152 816

## Description

The invention relates to a method for processing a cluster of viscera of a slaughtered animal, comprising the steps of drawing at least a part of the cluster of viscera out of the slaughtered animal using a drawing member and inspecting the cluster of viscera. The invention also relates to a device for carrying out the method.

The article "Hands-Off Inspection Proving Processors' Utopia" by David Amey in the journal PPM (Poultry Processing & Marketing) of January 1978, pages 28-33, describes an evisceration in which a conventional drawing device with a number of drawing members draws clusters of viscera out of the abdominal cavity of poultry which are conveyed in an overhead conveyor, after which the clusters of viscera are suspended from the back of the birds which are being carried away from the drawing device. The clusters of viscera are then detached from the carcasses by hand and are suspended from hooks of a second overhead conveyor for the clusters of viscera. The carcasses and the clusters of viscera are guided past different inspectors who are in radio contact with one another, the relationship between a specific carcass and a specific cluster of viscera being upheld by means of numbered and colour-coded hooks, so that in the event of a carcass being rejected by one inspector, the associated cluster of viscera can be rejected by the other inspector, and vice versa ("sequenced inspection"). In a further part of the path of the second overhead conveyor, hearts and livers are manually harvested from the viscera, after which the remainder of the cluster of viscera is processed further in a gizzard processing device for harvesting gizzards.

Drawbacks of the method and associated installation described in the above article are the complexity, the costs and the space required. The deployment of human labour is not only expensive but also a limiting factor with regard to increasing the throughput of the installation. Moreover, the considerable deployment of humans causes a major risk of cross-contamination.

NL-A-9101484 shows a drawing device with a number of drawing members, past which poultry which are being advanced in an overhead conveyor are taken in order for the cluster of viscera to be removed therefrom. The remaining carcasses are then passed through an inspection station with the aid of the overhead conveyor. The viscera which have been removed from the poultry by the drawing device are transferred to a second overhead conveyor which comprises gripper means for gripping the clusters of viscera, which are then passed through the inspection station with the aid of the second overhead conveyor. In the inspection station, the carcasses move synchronously with the associated clusters of viscera, so that an inspector can use this relationship to remove carcass and a cluster of viscera from the overhead conveyors in the event of a carcass and/or a cluster of viscera being rejected.

Drawbacks of the method and device described in NL-A-9101484 are the complexity, the costs and the space required. A further drawback is the difficulty of controlling the transfer of the clusters of viscera from the drawing device to the gripper means, with the result that the clusters of viscera are presented for inspection in a random orientation in the inspection station, and parts of the viscera cannot be seen. The gripper means may form an obstacle which impairs the view of organs of the clusters of viscera which are obligatory to inspect. After the carcasses and the clusters of viscera have been inspected in the inspection station, the clusters of viscera are released from the gripper means of the second overhead conveyor onto a belt conveyor for further processing, such as the harvesting of organs. Because of the random orientation of the clusters of viscera, this harvesting can only be carried out by hand or automatically by using extremely complex devices.

EP-A-0 538 943 describes an assembly comprising a drawing device for removing the clusters of viscera from the abdominal cavity of poultry, a belt conveyor and a transfer device for transferring the clusters of viscera which have been removed from the abdominal cavity and detached from the carcass of a bird from the drawing device to the belt conveyor. The drawing device is of the carousel type and comprises a number of drawing members which remove the clusters of viscera from the poultry and detach them therefrom, the drawing members fixing the clusters of viscera and carrying them by the gullet thereof, as is known from NL-A-9100153. The transfer device is likewise of the carousel type and comprises a number of pairs of clamping parts which interact with one another and between them are able to clamp a cluster of viscera which has been taken over from a drawing member in order to transport them a certain distance. The belt conveyor extends below the path of the clamping parts. Clusters of viscera which have been released by the transfer device onto the belt conveyor are transported at a short distance from and synchronously with the associated carcasses, in order to be inspected jointly by a veterinary inspector.

Drawbacks of the assembly of devices used for drawing and inspection in accordance with EP-A-0 538 943 are the complexity, the costs and the space which they take up. A further drawback is that the clusters of viscera which are presented for inspection are in a completely random orientation and consequently are difficult to inspect, since the viscera cannot be viewed from the side which is on the belt conveyor without further manipulation, and since organs which it is obligatory to inspect may be covered by other organs and for this reason cannot be seen without further manipulation. The following may be regarded as the causes of the arbitrary orientation of the clusters of viscera on the belt conveyor: firstly, the clusters of viscera, which are hanging by the gullet, may adopt any angular position in the drawing device. Secondly, when the clusters of viscera are being taken over from the drawing device by the transfer device, the fixing of the gullet to the drawing members is lost, so that the clusters of viscera are in a random orientation when they enter between the clamping parts. Thirdly, the fixing between the clamping parts is lost when the clusters of viscera are released above the belt conveyor.

EP-A-0 587 253 discloses a drawing method and device in which a cluster of viscera is fixed when it is in or partly out of the abdominal cavity of a slaughtered animal, the fixing being maintained and leading to a specific spatial orientation during the inspection and separation of internal organs or parts thereof from the cluster of viscera. The clusters of viscera which have been removed from the abdominal cavity of the slaughtered animal in the drawing device by drawing means are transferred to hooks of an overhead conveyor in order to be conveyed to an inspection station and, if appropriate, one or more separating stations.

Drawbacks of the method and device described in EP-A-0 587 253 are the complexity, the costs and the space required. The transfer of the clusters of viscera from the drawing members to the viscera cluster overhead conveyor may also go wrong or lead to a less than optimum orientation of the clusters of viscera during the inspection or the collection of organs, to undesired damage or to loss of slaughter products.

WO-A-99/03354 discloses a method in which, in a drawing device, clusters of viscera are removed from carcasses of poultry and are conveyed, in a viscera cluster conveyor which is separate from the drawing device, to an inspection station. A carcass conveyor is used to convey the drawn carcasses to the inspection station. During the inspection in the inspection station, the viscera cluster conveyor and the carcass conveyor are coupled to one another. It is possible to use combined supports which simultaneously bear a carcass and the associated cluster of viscera. In this case, the cluster of viscera is transferred to a combined support which is already supporting the carcass, or the carcass is transferred to a combined support which is already supporting the cluster of viscera.

Drawbacks of the method and devices described in WO-A-99/03354 are the complexity, the costs and the space required. Another drawback is the need for the clusters of viscera and/or carcasses to be transferred, which may cause errors, damage or loss of slaughter products.

EP-A-0 482 700 shows a device for harvesting hearts, lungs and livers from poultry. The poultry, the cluster of viscera of which is hanging on its back, is passed to a separating device by an overhead conveyor, where the cluster of viscera, which is still connected to the carcass, is positioned manually. The cluster of heart and lungs and also the liver are separated from the cluster of viscera in different automatic processing steps.

One drawback of the method and device according to in EP-A-0 482 700 is the existence of the connection between the carcass and the remainder of the cluster of viscera via the intestines, which can cause undesirable contamination to the (outer side of the) carcass. A further drawback is that, after the cluster of heart and lungs and the liver have been separated from the cluster of viscera, the remaining parts, such as the gizzard and the intestines, are still connected to the carcass and therefore still need to be separated from the carcass. The device used is complex and expensive, and the device has to be fed manually, which increases costs and can give rise to cross-contamination.

To summarize, a general drawback of the cited prior art is that the inspection of the cluster of viscera sometimes cannot take place optimally, since one or more organs which are crucial to the inspection, such as the heart, the lungs and the liver, are not readily visible to the veterinary inspector or the camera which is coupled to an image-processing assessment system for the purposes of inspection. Another general drawback is that the transfer of clusters of viscera from the drawing members to conveyor members of a viscera cluster conveyor may give rise to problems and losses. Further general drawbacks relate to the complexity of the installations, the associated high costs and the considerable space taken up by the installations.

It is an object of the invention to overcome the above problems or at least to greatly alleviate them, and for this purpose the invention is characterized, in that the inspection of the cluster of viscera takes place when the drawing member is supporting the viscera.

The inspection according to the invention is based on the insight that the cluster of viscera and the associated carcass, during or immediately after the drawing of the cluster of viscera out of the slaughtered animal, are in a very well defined position in the drawing member of a drawing device, which position, moreover, is eminently suitable for inspection. It is possible for the cluster of viscera to be only partially removed from the carcass, to have been removed from the carcass but still to be connected thereto, or to have been removed and detached from the carcass.

The term "supporting" of the viscera by the drawing member is understood, in the context of the invention, as meaning: the engagement of the drawing member on part of the cluster of viscera. The cluster of viscera may, for example, be resting on or against the drawing member or may suspended therefrom.

Since the inspection is taking place in the drawing device, there is no longer any need for clusters of viscera to be transferred to a separate conveyor in order for the clusters of viscera to be conveyed to a separate inspection station, and in a slaughterhouse this leads to a considerable simplification of the equipment and to a considerable saving of space. The costs for a separate inspection station are also eliminated.

To enable the inspection to take place as quickly as possible, during the inspection the cluster of viscera has preferably been removed from the slaughtered animal at least sufficiently far for the heart, liver and lungs to be visible.

In a further preferred embodiment, the cluster of viscera, while they are being inspected, is fixed at least at one location, as seen in a specific direction, or with respect to a device or component thereof. In particular, the fixing is performed by the drawing member. In a preferred embodiment, a separating device is arranged along a path of the drawing member, for the purpose of detaching the cluster of viscera from the drawing member in the event of the viscera being rejected. It is possible for the separating device to be designed for direct actuation by hand or foot or another body part of an inspector, but it is also possible for the separating device to be operated remotely or to be allowed to operate automatically on the basis of an inspection result which is determined by an inspection camera. The separating device may comprise one or more stationary or rotating blades or other cutting means, or may comprise a scissor-action device or may, for example, be designed to pull the cluster of viscera off the drawing member.

It is preferable for the inspection to be carried out in such a manner that the position of the cluster of viscera remains substantially constant, as seen in a vertical direction. This facilitates both inspection by a person and inspection by means of a camera, past which person or camera the cluster of viscera thus moves in the horizontal direction.

To lengthen the time available for inspection, it is advantageous to interrupt a movement of the cluster of viscera in the drawing member during the inspection. The said movement may be the movement of drawing the cluster of viscera out of the associated carcass, but may also, for example, be a conveying movement of the cluster of viscera with respect to the inspecting person or camera.

During the inspection of the carcasses, whether this be by an inspector or by a camera, in a preferred embodiment the following method is used. During the inspection, only the carcass is inspected, independently of the cluster of viscera. If the carcass is rejected, it is removed from the associated carcass conveyor means, which is usually a hook. After the inspection point, each carcass conveyor means is checked, for example with the aid of a suitable sensor, which is arranged along the path of conveyance of the carcasses, such as a photocell or a movable arm which is present in the path of the carcasses, in order to determine whether or not a carcass is connected to the carcass conveyor means. If the carcass is absent on account of an earlier rejection or for some other reason, the associated cluster of viscera is removed from the corresponding viscera cluster conveyor means, for example using the separation device disclosed elsewhere in the description and drawings or in some other way.
During the inspection of a cluster of viscera, be it by an inspector or by a camera, generally the same method as described in the previous paragraph may be applied. If the cluster of viscera is rejected, the carcass is removed from the associated carcass conveyor means, which is usually a hook. If, after the inspection point, each carcass conveyor means is checked, for example by the method described hereinbefore, in order to determine whether or not a carcass is conneted to the carcass conveyor means, the associated cluster of viscera is removed from the corresponding viscera cluster conveyor means, if the corresponding carcass is missing.
Instead of removing a carcass from a carcass conveyor means, the carcass may also, if the carcass and/or the associated viscera are rejected, be given a different path of conveyance, without the carcass leaving the carcass conveyor means, so that, after the inspection point, the absence from the place the carcass is expected to be in, may be detected in order for the associated cluster of viscera and/or the carcass to be removed from the processing line automatically or not.
In the event of a cluster of viscera being absent at a viscera cluster conveyor means, for example because (some of) the cluster of viscera has been rejected, the associated carcass may optionally be removed from the associated carcass conveyor means. The viscera cluster conveyor means may, in the context of the present invention, be a drawing member, but may also be a viscera cluster conveyor means according to the prior art. The carcass conveyor means may be a hook of a conveyor, but may also be any other support which is known in the prior art. During the inspection of the carcass, the associated cluster of viscera may be located elsewhere outside the field of view of the carcass inspector or camera. It is equally possible, during the inspection of the cluster of viscera, for the carcass to be located elsewhere outside the field of view of the viscera cluster inspector or camera. In all cases, it is necessary to define or to be able to determine which a cluster of viscera belongs to which carcass, for example by keeping track of counts of viscera cluster conveyor means or carcass conveyor or means.

Furthermore, the invention aims to overcome or at least substantially alleviate the abovementioned problems associated with the harvesting of organs, and for this purpose may include the separation of an organ or a part thereof from the cluster of viscera taking place when the drawing member is supporting the cluster of viscera.

As with inspection, also with harvesting of organs it is particularly advantageous for a support of the cluster of viscera which has already been used for drawing of the cluster of viscera, in particular a fixing of the cluster of viscera which has been produced by the drawing member, to be continued in the drawing device and to be used for the harvesting of organs, which leads to the advantages which have already been described above.

Where dependent claims refer to the fixing of the cluster of viscera and/or the separating or the time of separating of one or more organs or a part thereof from the cluster of viscera, it will be clear that a fixing and separation of this type can also be used as such if the cluster of viscera is being processed in a conventional way or in some other way, for example by supporting the cluster of viscera by a conventional viscera support or a newly developed viscera support which differs from the drawing member.

Preferred embodiments of the method according to the invention are represented in the dependent claims.

A device according to the invention for processing a cluster of viscera of a slaughtered animal comprises at least one drawing member for drawing at least part of the cluster of viscera out of the slaughtered animal, and inspection means for inspecting the viscera. The inspection means are arranged in the vicinity of the at least one drawing member and operate for carrying out an inspection of the cluster of viscera when the drawing member is supporting the cluster of viscera.

A device according to the invention for processing a cluster of viscera of a slaughtered animal may also comprise at least one drawing member for drawing at least part of the cluster of viscera out of the slaughtered animal, and separating means for separating an organ or a part thereof from the cluster of viscera. The separating means are arranged in the vicinity of the at least one drawing member and operate for separating an organ or a part thereof from the cluster of viscera when the drawing member is supporting the cluster of viscera.

Preferred embodiments of the device according to the invention are described in the dependent claims.

The invention is explained in more detail below with reference to the appended drawing, in which the Figures show non-limiting exemplary embodiments, and in which:
Fig. 1 shows a perspective view of a device according to the invention;
Fig. 2 diagrammatically shows a plan view of the device shown in Fig. 1 for the purpose of illustrating the structure and operation thereof;
Fig. 3 shows a perspective view of an inspection of a cluster of viscera and a carcass of a slaughtered bird which is being carried out by an inspector;
Fig. 4 shows a perspective view of an inspection of a cluster of viscera and a carcass of a slaughtered bird which is being carried out by an image-processing system;
Fig. 5 shows a perspective view of an inspection of clusters of viscera which is being carried out by an image-processing system, and the processing of the clusters of viscera;
Fig. 5a illustrates in front view the discharging of a carcass from a hook;
Fig. 5b illustrates in perspective view the carrying out of an inspection of carcasses and/or viscera clusters in a device according to the invention;
Fig. 6 illustrates in perspective view a separation being carried out in clusters of viscera;
Fig. 7 illustrates in perspective view another separation being made in clusters of viscera;
Fig. 8 illustrates in perspective view an alternative embodiment of the separation according to Fig. 7;
Fig. 9 illustrates in perspective view a further alternative to the separation shown in Figs. 7 and 8;
Fig. 10 illustrates in perspective view a first step for separating lungs from a cluster of viscera;
Fig. 11 illustrates in perspective view a second step for separating lungs from a cluster of viscera following the step according to Fig. 10;
Fig. 12 illustrates in perspective view a third step for separating lungs from a cluster of viscera following the step according to Fig. 11;
Fig. 13 illustrates in perspective view a first step of a further way of removing lungs from a cluster of viscera;
Fig. 14 illustrates in perspective view a second step for removing lungs from a cluster of viscera following the step according to Fig. 13;
Fig. 15 illustrates in perspective view a third step for removing lungs from a cluster of viscera following the step according to Fig. 14;
Fig. 16 illustrates in perspective view a fourth step for removing lungs from a cluster of viscera following the step according to Fig. 15;
Fig. 17 illustrates in perspective view a first step of yet another way of removing lungs from a cluster of viscera;
Fig. 18 illustrates in perspective view a second step of removing lungs from a cluster of viscera following the step according to Fig. 17;
Fig. 19 illustrates in perspective view a third step for removing lungs from a cluster of viscera following the step according to Fig. 18;
Fig. 20 illustrates in perspective view a fourth step for removing lungs from a cluster of viscera following the step according to Fig. 19;
Fig. 21 illustrates in perspective view a way of separating a heart from a cluster of viscera;
Fig. 22 illustrates in perspective view another way of separating a heart from a cluster of viscera;
Fig. 23 illustrates in perspective view yet another way of separating a heart from a cluster of viscera;
Fig. 24 illustrates in perspective view still another way of separating a heart from a cluster of viscera;
Fig. 25 illustrates in perspective view a further processing of (a part of) a cluster of viscera;
Fig. 26 shows a perspective view of part of an alternative embodiment of the device according to the invention, with a scraping/clamping mechanism;
Figs. 27 and 28 show perspective views of the mechanism of Fig. 26, in order to illustrate an operation thereof;
Fig. 29 shows a perspective view of the arrangement shown in Fig. 26 in a first processing stage;
Fig. 30 shows the arrangement of Fig. 29 in a following processing stage;
Fig. 31 shows the arrangement of Fig. 30 in a following processing stage;
Fig. 32 shows a front view, partially in cross section, of a slaughtered bird in order to illustrate the operation of the mechanism to obtain stomach fat;
Fig. 33 shows a perspective view of the arrangement shown in Fig. 30 in another processing stage;
Fig. 34 shows a front view, partially in cross section, of a slaughtered bird in order to illustrate the operation of the mechanism for supporting the intestines; and
Fig. 35 shows a perspective view which illustrates the operation of the mechanism is a subsequent processing stage.

Throughout the various figures, similar reference numerals relate to similar components or components which have a similar function.

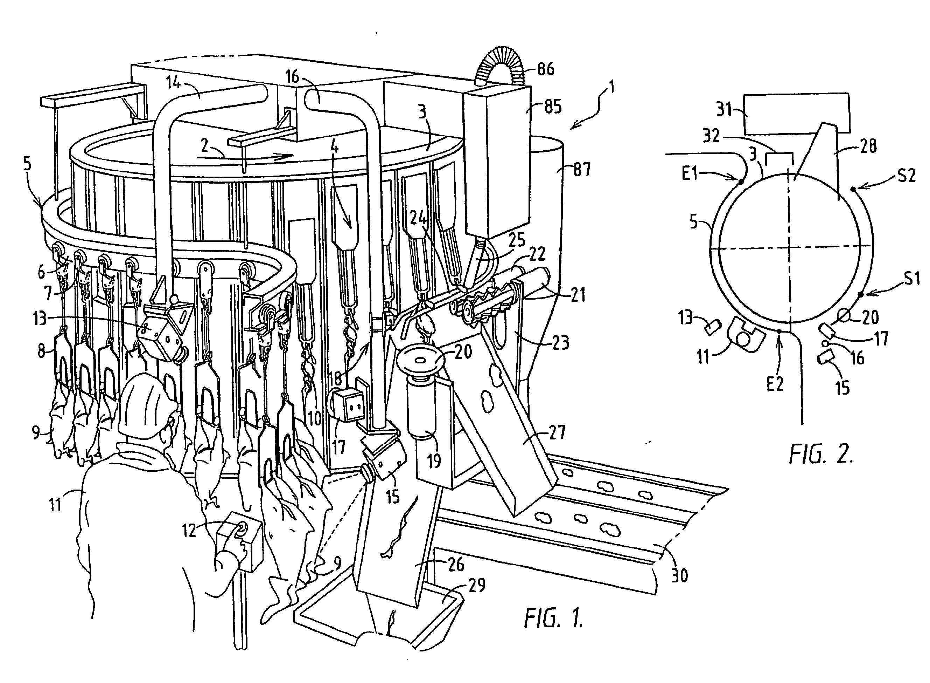

Figs. 1 and 2 show a device 1 for processing slaughtered birds and parts thereof. The device 1 comprises a structure 3 which rotates continuously or intermittently in the direction indicated by arrow 2 and along its periphery supports a number of controllable drawing members 4 which are known from Dutch patent application 1014100, which is not a prior publication. The movement of the drawing members 4 is controlled, for example, with the aid of wheels which are not shown in more detail, are guided in curved tracks and are coupled to components of the drawing members 4.

The rotating structure 3 is mounted in a frame (not shown in more detail). Along part of the periphery of the rotating structure 3, an overhead conveyor 5 is arranged in a fixed position with respect to the abovementioned frame, this conveyor comprising a rail 6 along which trolleys 7 are moved, in the direction indicated by arrow 2, at predetermined intervals. Each trolley 7 bears a hook 8 which, for its part, is intended to support a carcass 9 of a slaughtered bird, which is hung by its ankle joints. The trolleys 7 move at a speed which is such that they run synchronously with the nearby drawing members 4, a trolley 7, and therefore, if the hook 8 is occupied, a carcass 9 being situated opposite each drawing member 4.

During a passage of a carcass 9 through the conveyor 5, between points E1 and E2 (Fig. 2), clusters of viscera 10 are at least partially removed from the carcasses 9, with at least the heart, liver and lungs being visible. During the drawing operation, the clusters of viscera 10 are held securely by the drawing members 4 and are carried past a number of processing stations which are arranged along the periphery of the rotating structure 3.

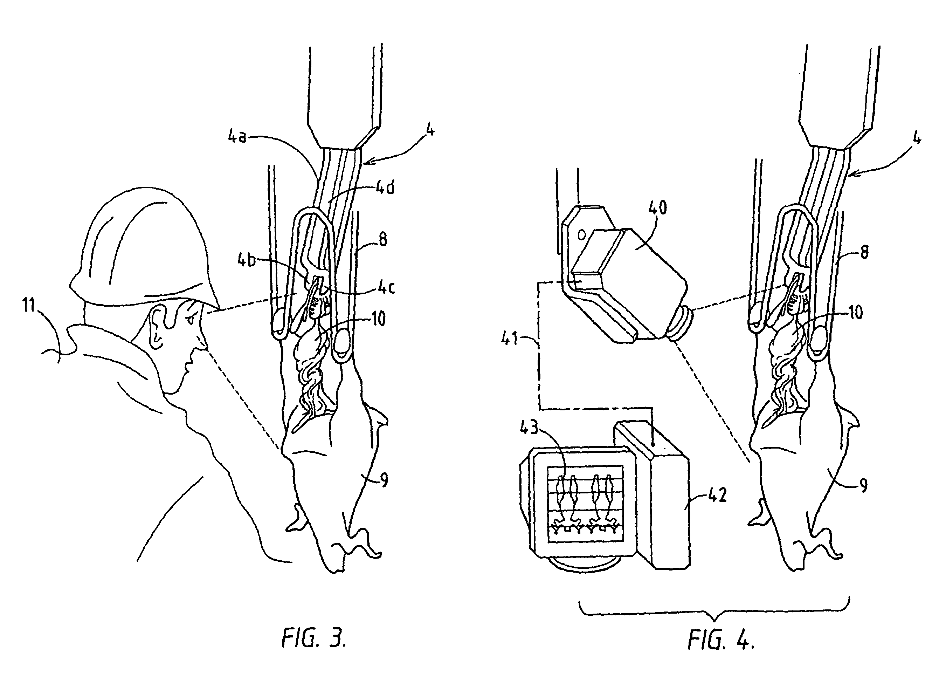

Along the periphery of the rotating structure 3, one or more inspections take place, which will be explained in more detail below with reference to Figs. 3-5. To carry out the inspections, one or more mirrors may be arranged in the vicinity of the rotating structure 3, on that side of the slaughtered animals to be inspected which faces towards the rotating structure 3. An inspection can be carried out by an inspector 11, who can approve or reject a carcass 9 or a cluster of viscera 10 by pressing one or more buttons 12, as will be explained in more detail below with reference to Fig. 3. Furthermore, an inspection of a carcass 9 and/or a cluster of viscera 10 can be carried out with the aid of a camera 13 which is mounted on an arm 14 which is fixedly connected to the frame. An inspection of this type is explained in more detail below with reference to Fig. 4. Another inspection of the carcasses 9 can take place with the aid of a camera 15 which is attached to an arm 16 which is fixedly connected to the abovementioned frame. An inspection of a cluster of viscera 10 can be carried out using a camera 17 which is arranged in a fixed position on the arm 16, as will be explained in more detail below with reference to Fig. 4.

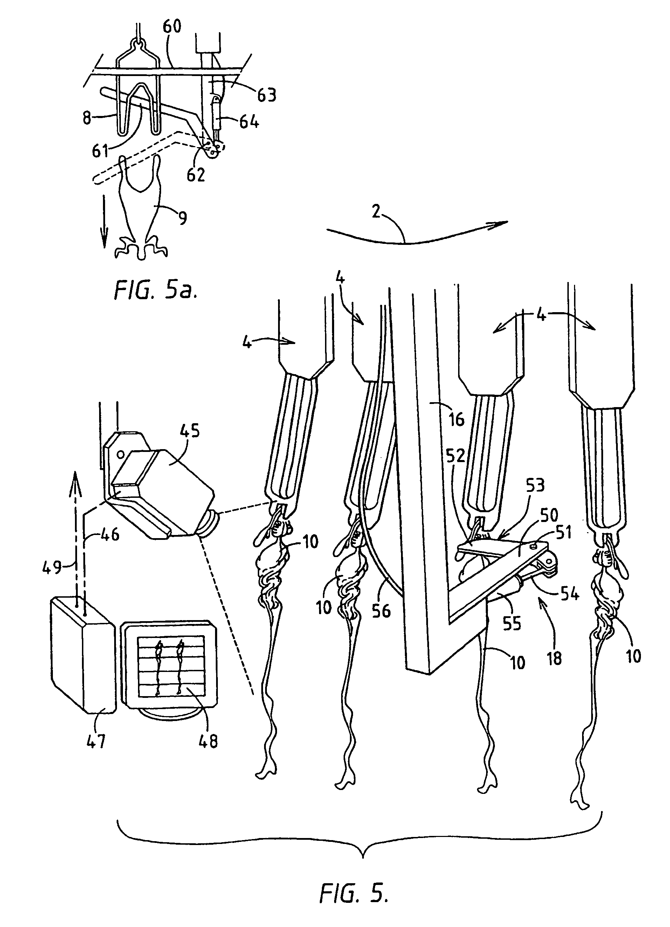

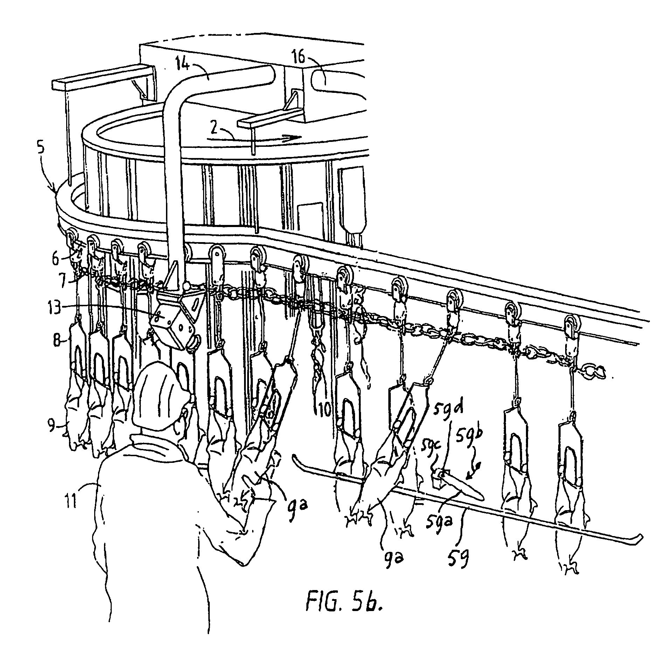

A separating device 18, the function and operation of which will be explained in more detail below with reference to Fig. 5, is attached to the arm 16.

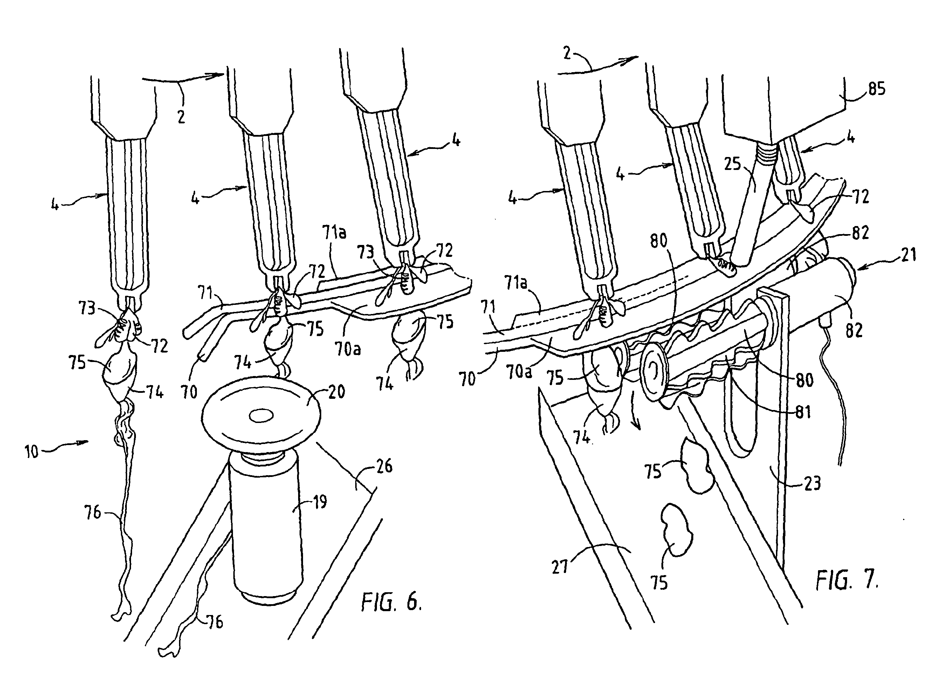

In a subsequent processing station arranged alongside the rotating structure 3, a circular blade 20, which is driven in rotation by a motor 19, is used to carry out a separating operation on a cluster of viscera 10 which is moved onwards by a drawing member 4, as will be explained below with reference to Fig. 6.

In a following processing station arranged alongside the periphery of the rotating structure 3 there are two rotating scraper members 21 and 22, attached to a support 23. The function of this processing station will be explained in more detail below with reference to Fig. 7. A guide 24, comprising a central slot in which a part of the clusters of viscera 10 is guided, extends alongside part of the periphery of the rotating structure. Above the guide 24 there is a suction tube 25, the function of which will be explained in more detail below with reference to Fig. 7.

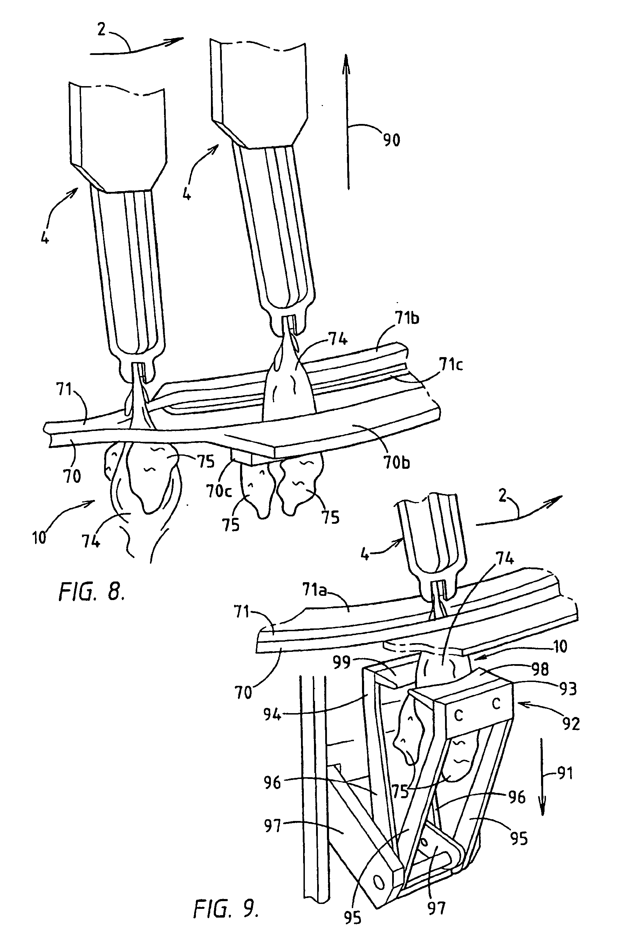

Various processing operations, in particular the separation of the liver, the lungs and the heart from the respective clusters of viscera, can be carried out on the clusters of viscera along the section of the periphery of the rotating structure 3 which extends between the points S1 and S2 indicated in Fig. 2, as will explained in more detail below with reference to Figs. 8-24.

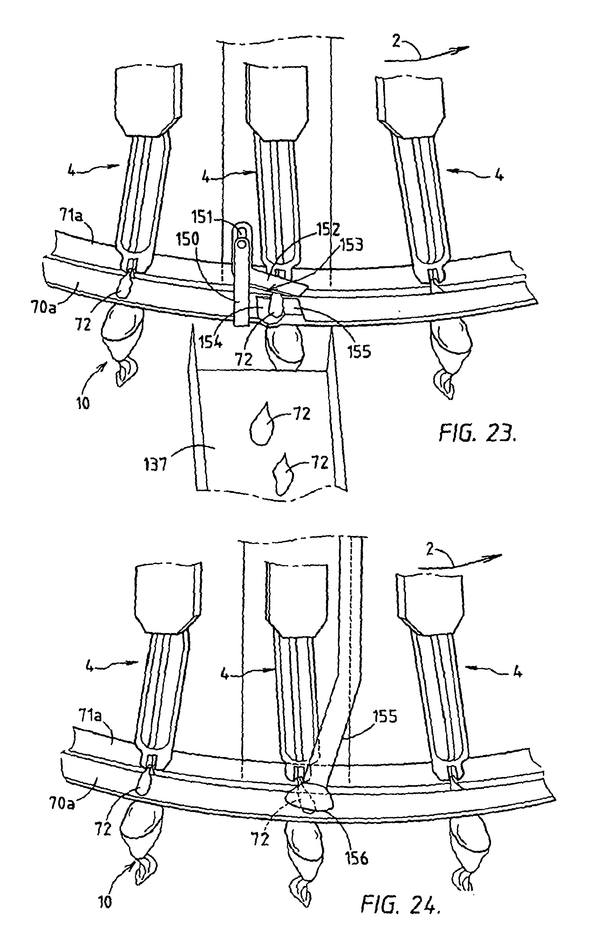

Discharge chutes 26, 27 and 28 for internal organs which have been separated from the clusters of viscera are arranged at various points along the path of the drawing members 4. The discharge chute 26 leads to a hopper 29, the discharge chute 27 leads to a belt conveyor 30, and the discharge chute 28 leads to a gizzard processing device 31, as will be explained in more detail below with reference to Fig. 24. Finally, a washing station 32 is provided for the purpose of cleaning the drawing members 4 and other structural parts as they move past.

Fig. 3 shows a detailed view of the situation during the inspection of a carcass 9, from which a cluster of viscera 10 has been partially removed by a drawing member 4, by the inspector 11. The drawing member 4 comprises a bracket 4a, which is provided with two projections 4b, 4c positioned at a distance from one another. The gullet of the cluster of viscera 10 is clamped securely, with the aid of one end of an arm 4d which can move in the region of the bracket 4a, between said end and the projection 4b, so that the cluster of viscera 10 is hanging by the gullet.

The entire carcass 9 and the heart, lungs, liver, gizzard and part of the intestines of the cluster of viscera 10 are located within the field of view of the inspector 11, which is indicated by dashed lines. The sides of the carcass 9 and the cluster of viscera 10 which face away from the inspector 11 can also be seen with the aid of a mirror which is arranged behind the carcass 9 and is not shown in more detail in the Figure.

In the event of the carcass 9 and/or the cluster of viscera 10 being rejected, the inspector uses one or more buttons 12 or some other means to transmit an eject signal to a control system which is adapted to remove the cluster of viscera 10 from the drawing member 4 and/or to remove the carcass 9 from the hook 8, as will be discussed in more detail below with reference to Figs. 5 and 5a, respectively.

Fig. 4 shows a camera 40, which is equivalent to the camera 13 in Fig. 1, which can be used to take a moving or still image of the carcass 9 and cluster of viscera 10 which are situated within the image field, indicated by dashed lines. The camera 40 is able to record only an image of that side of the carcass 9 and the cluster of viscera 10 which faces the camera 40 or, with the aid of a mirror, which is not shown in more detail and is located behind the carcass 9, also of that side of the carcass 9 and the cluster of viscera 10 which faces away from the camera 40. Each image taken by the camera 40 is transmitted, via a wired or wireless connection 41, to an image-processing device 42, such as a programmed computer, which analyses the image and decides to approve or reject on the basis of predetermined criteria. Each image which is recorded can be displayed on a screen 43. In the event of the carcass 9 or the cluster of viscera 10 being rejected, the image-processing device 42 can generate an eject signal which is transmitted to the control device which has already been discussed in connection with Fig. 3.

Fig. 5 shows a camera 45, which is equivalent to the camera 17 shown in Fig. 1, which can be used to take a moving or still image of the cluster of viscera 10 situated in the image field of the camera 45, which is indicated by dashed lines. The camera 45 is able to record only an image of that side of the cluster of viscera 10 which faces towards the camera 45 or, with the aid of a mirror, which is not shown in more detail and is situated behind the cluster of viscera 10, also to record that side of the cluster of viscera 10 which faces away from the camera 45. Each image which is recorded by the camera 45 is transmitted, via a wired or wireless connection 46, to an image-processing device 47, such as a programmed computer, which analyses the image and decides to approve or reject on the basis of predetermined criteria. Each recorded image can be displayed on a screen 48. In the event of the viscera 10 being rejected, the image-processing device 47 can generate an eject signal which is transmitted, via a wired or wireless connection 49, to the control device which has already been discussed in connection with Fig. 3.

The separating device 18 which is represented in detail in Fig. 5 comprises an arm 50, at the end of which a cutting device 52 with a cutting edge 53 is arranged in such a manner that it can pivot about a pin 51. At the end which is remote from the cutting edge 53, the cutting device 52 is pivotably coupled to a rod 54 of a pneumatic or hydraulic piston-cylinder unit 55. Actuation of a pneumatic or hydraulic valve (not shown in more detail) causes working fluid to be fed to the piston-cylinder unit 55 via a line 56 in order to displace the rod 54 out of the position shown in Fig. 5 with respect to the piston-cylinder unit 55, the cutting edge 53 of the cutting device 52 crossing the path of the clusters of viscera 10 which are suspended from the drawing members 4 and are moving in the direction of the arrow 2. If the inspector 11, the image-processing device 42 or the image-processing device 47 has decided to reject a specific cluster of viscera 10, control of the separating device 18 is used to cut the viscera 10 in question, in coordination with their movement in the direction of arrow 2, from the associated drawing member 4, in order for at least part of the viscera to be destroyed.

Following the above discussion of the camera arrangements shown in Figs. 4 and 5, reference is also made to the camera 15 shown in Fig. 1, which is intended, if desired, to record images of the rear side of carcasses 9 and is connected, in a similar way and for a similar purpose as the cameras 40 (13) and 45 (17), to an image-processing device for the optional generation of an eject signal. A mirror which is arranged on that side of the carcasses 9 which faces away from the camera 15 and is not shown in more detail also allows the camera 15 to record the front side of the carcasses 9. If the camera 15 establishes that a carcass 9 is missing from a specific hook 8 of the carcass conveyor 5, the separating device 18 is used to remove the associated cluster of viscera 10 from the corresponding drawing member 4.

Fig. 5a shows a hook 8 which is advanced by the conveyor 5 (Fig. 1) and is situated downstream of the place of inspection of a carcass 9 hanging from the hook 8. On one side, the hook 8 is supported by moving the hook 8 along and in contact with a guide 60. Along the path of the hook 8 a movable arm 61 is arranged, which is connected to a stationary support 63 in such a manner that it can pivot about a pin 62. On the basis of an eject signal, the arm 61 can be moved, with the aid of a pneumatic or hydraulic piston-cylinder unit 64, between the position indicated by a dashed line (an at-rest position) and the position indicated by a solid line (an eject position). When the piston-cylinder unit 64 moves the arm 61 out of the at-rest position to the eject position in synchronism with the hook 8, through the area where the ankle joints of a carcass 9 are located if there is a carcass 9 hung from the hook 8, the ankle joints are displaced with respect to the hook 8 until they reach an area where the carcass 9 drops off the hook 8. The carcass 9 which has been released is then at least partially destroyed.

In accordance with Fig. 1, Fig. 5b shows a device for processing slaughtered birds or parts thereof, in particular for the drawing of viscera clusters 10 out of carcasses 9. The device comprises a structure 3 which rotates continnously or intermittently in the direction indicated by arrow 2, and along its periphery supports a number of controllable drawing members 4. The movement of the drawing members 4 is controlled, for example, with the aid of wheels which are not shown in more detail, are guided in curved tracks and are coupled to components of the drawing members.
The rotating structure 3 is mounted in a frame (not shown in more detail). Along part of the periphery of the rotating structure 3, an overhead conveyor 5 is arranged in a fixed position with respect to the abovementioned frame, this conveyor comprising a rail 6 along which trolleys 7 are moved, in the direction indicated by arrow 2, at predetermined intervals. Each trolley 7 bears a hook 8 which, for its part, is intended to support a carcass 9 of a slaughtered bird, which is hung by its ankle joints. The trolleys 7 move at a speed which is such that they run synchronously with the nearby drawing members 4, a trolley 7, and therefore, if the hook 8 is occupied, a carcass 9 being situated opposite each drawing member 4.
At the location where the overhead conveyor 5 departs from the periphery of the rotating structure 3, as seen in the direction of the arrow 2, a guide 59 is fixedly mounted, along a certain distance parallel to the overhead conceyor 5. The guide 59 is situated at the level of the cracasses 9, but outside the conveyor path thereof. A hinged arm 59a is mounted in the conveyor path of the carcasses 9, which arm can move in the direction of the double arrow 59b around an axis 59d connected to a sensor 59c. In a resting position of the arm 59a, the free end thereof is located in the path of the carcasses 9. During the passage of a carcass 9, the arm 59a is temporarily pushed out of the resting position whereby a signal is produced in the sensor 59c. The presence or absence in the overhead conveyor 5 of a carcass may thus be detected.
During the passage along the device of a carcass 9 in the conveyor 5, viscera clusters 10 are removed from the carcasses 10 at least partially, with at least the heart, the liver and the lungs being visible. During the drawing operation, the viscera clusters 10 are held securely by the drawing members 4, are carried by them past a number of processing stations which are arranged along the periphery of the rotating structure 3, or they are transferred to viscera cluster conveyor members and carried along the processing stations mentioned before.
Along the periphery of the rotating structure 3, at least one inspection takes place, carried out by an inspector 11 and/or with the aid of a camera 13. If the viscera cluster 10 and/or a carcass 9a is rejected, the inspector draws the (associated) carcass 9a towards him, so that it ends up at the side of the guide 59 which faces him, and is thus no longer located in the path of conveyance of the remaining carcasses 9. By the way, the relevant carcass 9a is carried along the guide 59 by the hook 8, at the location where the sensor 59c of the arm 59a detects an open space in the row of carcasses 9, a control system which is connected to the sensor 59c generates an eject signal for the viscera cluster 10 associated with the transferred carcass 9a, which cluster is still present along the periphery of the rotating structure 3, or has already been transferred to a separate viscera cluster conveyor. At the end of the guide 59, the carcass 9a may end up in the original path of conveyance and may be processed further in an ordinary fashion, if only the associated viscera cluster had been rejected, or the carcass 9a, if rejected, may be taken from the hook 8 in a manner not shown in more detail, for example by the method illustrated according to Fig. 5a.

Fig. 6 shows a detailed view of clusters of viscera 10 which are hanging from the drawing members 10 and are being advanced in the direction indicated by arrow 2. On either side of the path of the clusters of viscera 10, guides 70, 71 are arranged at a predetermined distance from one another, so that a slot is formed. The height of the guides 70, 71 is such that, when the clusters of viscera 10 run between the guides, a heart 72 and lungs 73 are located above the guides 70, 71, and other organs, such as gizzard 74, liver 75 and intestines 76 lie beneath the guides 70, 71. The circular blade 20 is situated in the path of the clusters of viscera 10 and, as the clusters of viscera move past, it cuts off the intestines 76, which then drop onto the discharge chute 26 and are discharged via the hopper 29 (Fig. 1). The guides 70, 71 comprise collars 70a, 71a downstream of the circular blade 20.

Fig. 7 shows the scraper members 21, 22 which are arranged beneath the guides 70, 71 on either side of and partially in the path of the passing clusters of viscera 10. In Fig. 7, the intestines 76 have been removed from the clusters of viscera 10, although this is not essential for the operation of the scraper members 21, 22. Each scraper member 21, 22 comprises an elongate rotor 80 which is provided with one or more flaps 81 which extend substantially in the longitudinal and radial directions of the rotor 80, are provided with a serrated edge and are made from a flexible material. The rotors 80 are each driven in opposite directions by a motor 82, specifically in such a manner that the flaps 81 of the respective rotors 80 move downwards past the clusters of viscera 10, in particular past parts of the liver 75. The forces which the liver 75 is exposed to as a result are so high that the connections between the livers 75 and the remainder of the clusters of viscera 10 are broken. The livers 75 which have been detached in this way drop onto the discharge chute 27 and then onto the belt conveyor 30 (Fig. 1).

Furthermore, Fig. 7 shows that on the collar 70a of the guide 70, the heart 72 and the lungs 73 are moved past a suction nozzle of the suction tube 25. A suction device 85 generates an air flow which is directed into the suction tube 25 as a result of a reduced presure prevailing in the suction tube 25 compared to the surrounding area. The air flow is sufficiently powerful to suck up the passing lungs 73 and to separate them from the remainder of the cluster of viscera, but is not sufficiently powerful to separate passing hearts 72 or other parts from the remainder of the cluster of viscera. To assist separation, the suction nozzle of the suction tube 25 may be provided with a cutting edge. The separated lungs 73 are discharged (cf. also Fig. 1) via a suction device 85 and a line 86 to a reservoir 87.

Fig. 8 illustrates an alternative way of scraping livers 75 off clusters of viscera 10. For this purpose, the distance between the guides 70, 71 with collars 70b and 71b, respectively, is increased, in order to provide space for the gizzard 74 to pass through. Optional scrapers 70c (not visible in the figure) and 71c made from a rigid or flexible material are arranged along the edges of the widened slot created in this way. The distance between the guides 70 and 71 or the scrapers 70c and 71c is too short to allow the gizzard 74 and the liver 75 on it to pass through. Therefore, when the drawing member 4 from which the cluster of viscera 10 is hanging is moved in the direction indicated by arrow 90, the gizzard 74 will be able to pass between the guides 70, 71 or the scrapers 70c, 71c, but the liver 75 will be unable to do so. The result is that the liver 75 is scraped off the cluster of viscera 10 by the movement of the drawing member 4, after which it can be discharged via a discharge chute 27 in a similar manner to that illustrated in Fig. 7. In Fig. 8 both the heart 72 and the lungs 73 have already been removed from the cluster of viscera 10, but this is not essential for the operation of the arrangement illustrated.

Fig. 9 illustrates the scraping of the liver 75 off the cluster of viscera 10 with the aid of scraper tongs 92 which are stationary or move synchronously with the drawing member 4 in the direction indicated by arrow 91 and, for example in the same way as the drawing member 4, are connected to and controlled by or via the rotating structure 3 (Fig. 1). The scraper tongs 92 comprise a first jaw part 93 and a second jaw part 94, which are each mounted on arms 95 and 96, respectively, which in turn are pivotably connected to supports 97. The jaw parts 93 and 94 comprise scraper parts 98 and 99, respectively, which face towards one another and are made from a rigid or flexible material. The jaw parts 93 and 94 can be moved towards or away from one another with the aid of control means (not shown in more detail). To scrape a liver 75 off a cluster of viscera 10, the jaw parts 93 and 94 are moved apart and are placed just below the guides 70 and 71, on either side of a cluster of viscera 10. Then, the jaw parts 93 and 94 are moved towards one another until a gap through which the gizzard 74 can pass, but the gizzard 74 and the liver 75 on it cannot pass, remains between them. In a subsequent step, the scraper tongs 92 are moved in the direction indicated by arrow 91 with respect to the guides 70, 71, with the result that the liver 75 is separated from the cluster of viscera 10 by the closing of the scraper parts 98, 99.

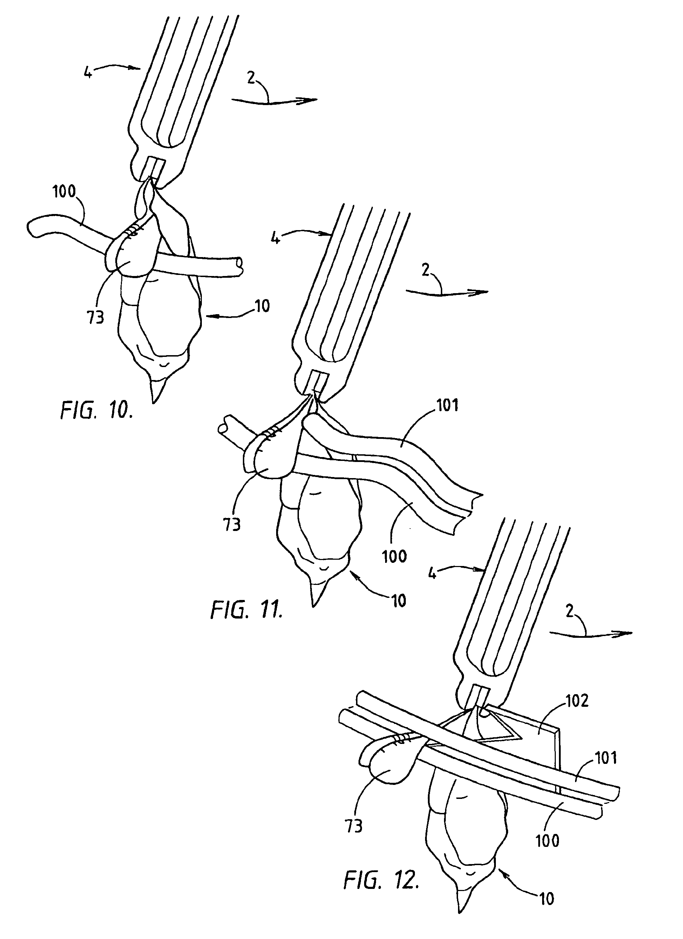

Figs. 10-12 illustrate an alternative way (cf. Fig. 7) of separating the lungs 73 from the cluster of viscera 10. For this purpose, a first guide 100 is arranged in the path of the cluster of viscera 10 hanging from the drawing member 4, in such a manner that the guide, when the cluster of viscera is moved in the direction of the arrow 2, passes between the lungs 73 and the remainder of the cluster of viscera 10, connective tissue between the lungs 73 and the remainder of the cluster of viscera 10 coming to lie close to or against the first guide. As illustrated in Fig. 11, said connective tissue is then, as the cluster is moved onward in the direction indicated by the arrow 2, moved into a gap between the first guide 100 and a second guide 101. As the cluster of viscera 10 is transported onward by the drawing member 4, the guides 100 and 101 diverge away from the path of the drawing member 4, with the result that the lungs 73 move to a distance from the remainder of the cluster of viscera 10 but are still connected via the said connective tissue. As illustrated in Fig. 12, after this state has been reached, a cutting device 102 with a >-shaped cutting edge is arranged in the path of the connective tissue, with the result that the lungs 73 are cut off and, under the force of gravity, drop out of the gap between the guides 100 and 101 in order to be discharged to a designated location.

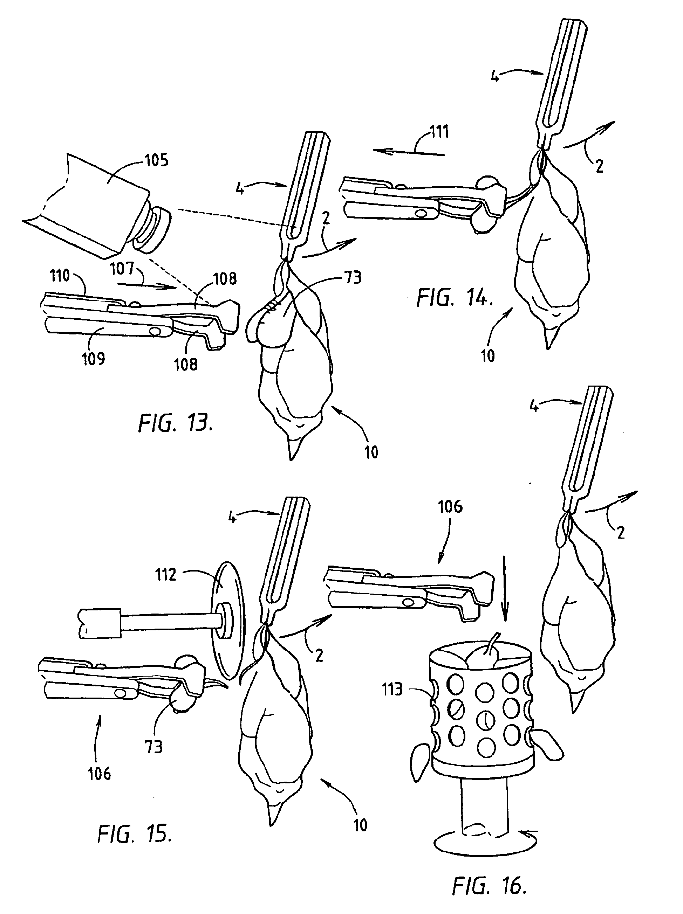

Figs. 13-16 illustrate a further alternative way of separating lungs 73 from the cluster of viscera 10. The cluster of viscera 10 which is hanging from the drawing member 4 is detected by a camera 105 in the image field thereof which is indicated by dashed lines. The drawing member 4 may be moved onwards in the direction indicated by the arrow 2 or may be stationary. The image detected by the camera 105 can be used by an image-processing device, which is coupled to the camera 105 and is not shown in more detail, to determine the location of the lungs 73 in space with respect to the camera 105. On the basis of this information, a gripper device 106 is moved towards the lungs 73, in the direction of arrow 107. The gripper device 106 comprises two jaw parts 108 which are hinged on a support 109 and can be moved towards and away from one another with the aid of an actuating arm 110. As shown in Fig. 14, the lungs 73 are gripped by the gripper device 106 and are moved away from the remainder of the cluster of viscera 10 in the direction indicated by arrow 111, the lungs 73 remaining connected to the rest of the cluster of viscera 10 via connective tissue. As shown in Fig. 15, the connective tissue is cut through by a circular blade 112, which is driven via a spindle by a motor (not shown), in order for the lungs 73 to be separated from the remainder of the cluster of viscera 10. As shown in Fig. 16, the lungs 73 can then be dropped out of the gripper device 106 into a rotating perforated drum 113, where they are forced through the perforations and divided into pieces as a result of the centrifugal forces which are produced. Incidentally, it is also possible for the step shown in Fig. 15 of cutting through connective tissue to be skipped and for the lungs 73 to be dropped out of the gripper device 106 directly from the situation illustrated in Fig. 14, into the rotating drum 113, which will cause the connective tissue to break.

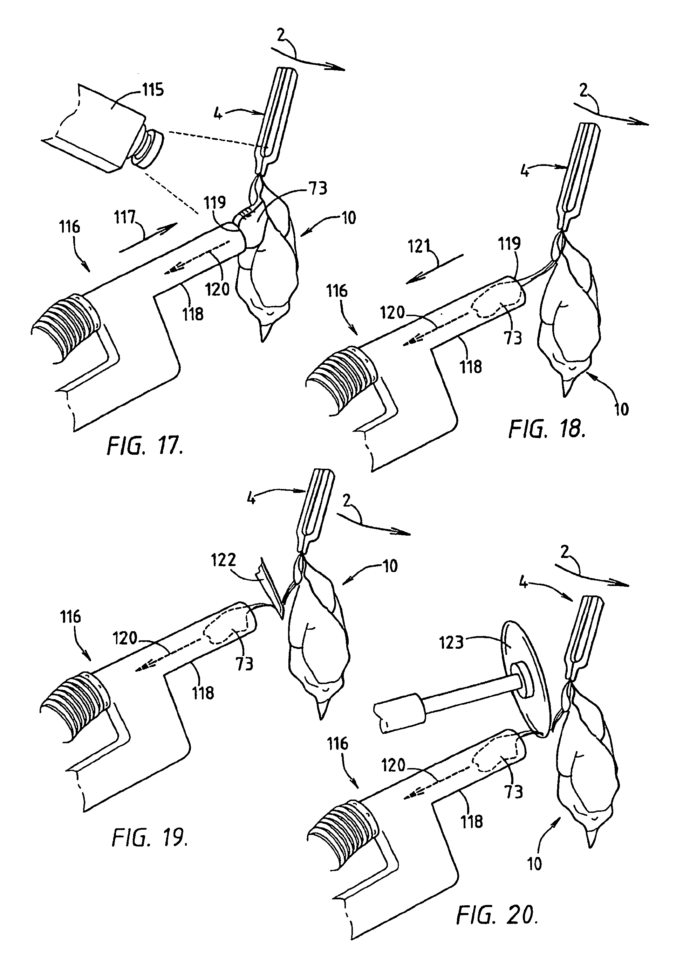

Figs. 17-20 illustrate a further alternative way of separating lungs 73 from a cluster of viscera 10. The cluster of viscera 10, which is hanging from the drawing member 4, is detected by a camera 115 in the image field thereof, which is indicated by dashed lines. The drawing member 4 may be moving in the direction indicated by arrow 2 or may be stationary. An image-processing device which is coupled to the camera 115 and is not shown in more detail can be used to determine, from the image which has been recorded by the camera 115, the location of the lungs 73 in space with respect to the camera 115. On the basis of this information, a suction device 116 is moved towards the lungs 73, in the direction indicated by arrow 117. The suction device 116 has a suction tube 118 with an open suction nozzle 119. The pressure in the suction tube 118 is lower than in the surrounding area, resulting in an air flow in the direction indicated by arrow 120. As shown Fig. 18, the lungs 73 are sucked into the suction tube 118, remaining connected to the remainder of the cluster of viscera 10 via connective tissue. The suction device 116 is moved away from the cluster of viscera 10 in the direction indicated by arrow 121. As shown in Figs. 19 and 20, the connective tissue is then cut through with the aid of an elongate blade 122 or circular blade 123, with the result that the lungs 73 can be further discharged in the suction device 116 to a designated location.

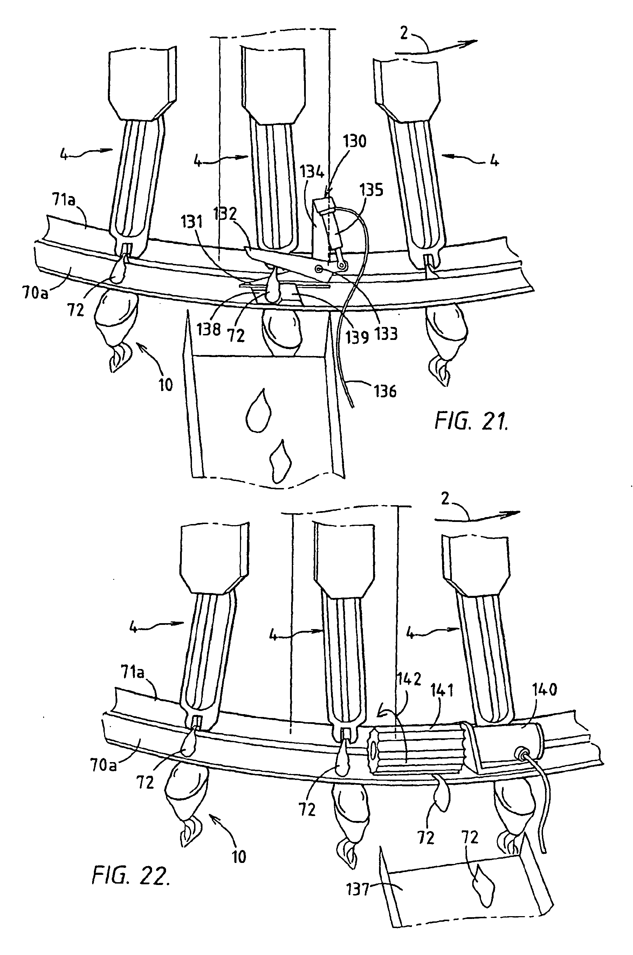

It has already been shown and explained, on the basis of Figs. 6 and 7, how, given a suitable selection of guides 70 and 71, and associated collars 70a and 71a, the heart 72 can be made to move over the collar 70a. In the text which follows, it is assumed that the lungs have already been separated from the cluster of viscera 10 along the periphery of the rotating structure 3, in one of the ways illustrated in Fig. 7 or Figs. 10-20. Figs. 21-24 show how the heart 72 is then separated from the remainder of the cluster of viscera 10 which are moved onwards, hanging from a drawing member 4, in the direction indicated by arrow 2.

For this purpose, Fig. 21 shows a scissor-action device 130, having a first scissor part 131, which is mounted on the collar 70a, and a second scissor part 132, which is hingedly connected, via a pin 133, to the first scissor part 131. A piston-cylinder unit 135 is mounted on a support 134, which is connected to the first scissor part 131, for the purpose of moving the second scissor part 132 with respect to the first scissor part 131 as a result of the supply of a pressure fluid via line 136. As illustrated in Fig. 21, connective tissue between the heart 72 and the remainder of the cluster of viscera 10, during the onward movement of the drawing members 4 in the direction indicated by arrow 2, passes between the scissor parts 131 and 132, after which the second scissor part 132, through actuation of the piston-cylinder unit 135, is moved towards the first scissor part 131 in order to cut off the heart 72 from the remainder of the cluster of viscera 10, in a movement which is synchronized with that of the drawing members 4. At the cutting point, a recess 138 and a shoulder 139 are provided on the collar 70a in order to stabilize the heart 72 before and during the cutting operation. The heart 72 which has been cut off drops, under the force of gravity, onto a discharge chute 137 for further processing.

Fig. 22 shows an elongate separating roller 141 which is mounted on the collar 70a and is driven by a motor 140. On its circumference, the separating roller 141 is provided with ribs extending in the longitudinal direction, and the roller is driven in the direction indicated by arrow 142 by the motor 140. When the drawing member 4 moves in the direction indicated by arrow 2, the heart 72 passes between the separating roller 141 and the collar 70a. In this position, the separating roller 141, partly on account of its ribs, has such a grip on the heart 72 that the latter is moved away from the drawing member 4 towards the edge of the collar 70a, breaking connective tissue between the heart 72 and the remainder of the cluster of viscera 10. The heart 72 which has been separated in this way drops, under the force of gravity, onto the discharge chute 137 for further processing.

Fig. 23 shows an upright support 150 mounted on the collar 70a. The top end of the support 150 bears a laterally projecting pin 151, to which a substantially V-shaped cutting member 152 is pivotably coupled at one end in order to move in a vertical plane above the gap between the guides 70 and 71 or above the guide 70 in the vicinity of the said gap. The cutting member 152 is provided with a cutting edge 153. In the vicinity of the cutting point, a recess 154 and a shoulder 155 are provided, which have a similar function to the recess 138 and the shoulder 139 which are shown in Fig. 21. As the drawing member 4 is moved onwards in the direction indicated by arrow 2, connective tissue between the heart 72 and the remainder of the cluster of viscera 10 passes beneath the cutting member 152 and comes into contact with the cutting edge 153, with the result that the heart 72 is separated from the remainder of the cluster of viscera 10. Under the force of gravity, the heart 72 drops onto the discharge chute 137 in order to be processed further.

The cutting action of the cutting member 152 takes place by virtue of its own weight, but may optionally be increased by using a suitable spring or the like (not shown in more detail) to apply a mechanical prestress to the cutting member 152, forcing its cutting edge 153 downwards.

Fig. 24 shows a suction tube 155, of which a suction nozzle 156 is positioned a certain distance above the collar 70a. The pressure in the suction tube 155 is lower than that of the surrounding area, with the result that air flows into the suction tube 155 from outside. The resulting air flow is selected to be powerful enough for a heart 72 which has been conveyed over the collar 70a, in the direction indicated by arrow 2, with the aid of a drawing member 4, to be sucked into the suction tube 155 and for the connective tissue between the heart 72 and the remainder of the cluster of viscera 10 to be broken, so that the heart 72 can be discharged by the air flow through the suction tube 155. As an optional additional measure, the suction opening of the suction tube 155 may be provided with a cutting edge in order to assist the desired break in the connective tissue.

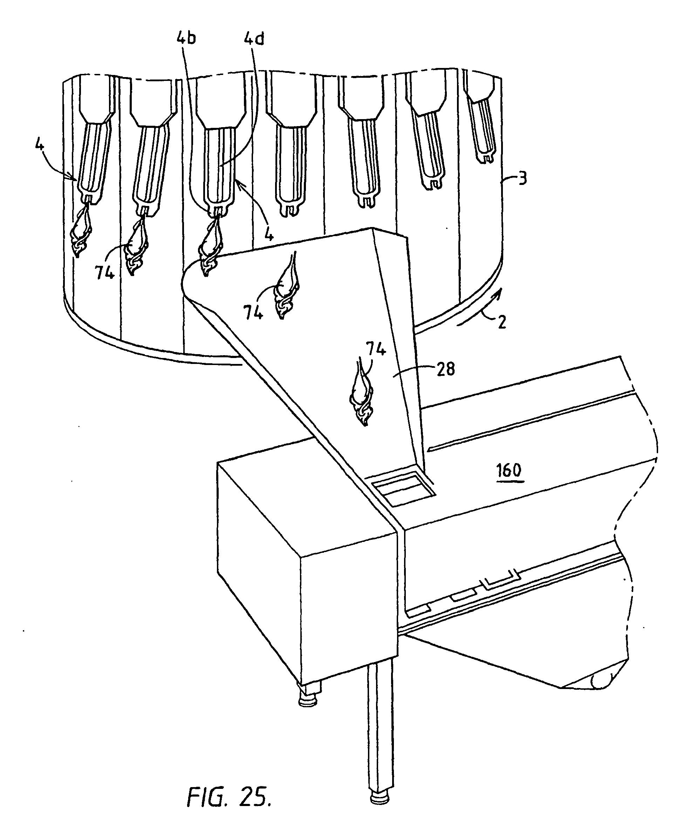

Fig. 25 shows part of the rotating structure 3, moving in the direction indicated by arrow 2, with drawing members 4 which bear gizzards 74 with attached tissue by holding the gullet. In earlier processing steps, for example those which have been discussed and illustrated with reference to the preceding Figures, the intestines, lungs, heart and liver have already been separated from a cluster of viscera 10. It should be noted that it is also possible for one or more of the abovementioned organs still to be connected to the gizzard 74 in the situation shown in Fig. 25, in particular the intestines. As a result of the free end of the movable arm 4d of the drawing member 4 situated above the discharge chute 28 (cf. also Fig. 1) and the projection 4b of this drawing member being moved away from one another, the gullet is released, and in this way the gizzard 74 is dropped onto the discharge chute 28. The gizzard 74 slides towards a feed opening of a gizzard processing device 160, which is known in the prior art, for example from EP-A-0 141 432, for peeling and removing undesired tissue from the gizzard 74.

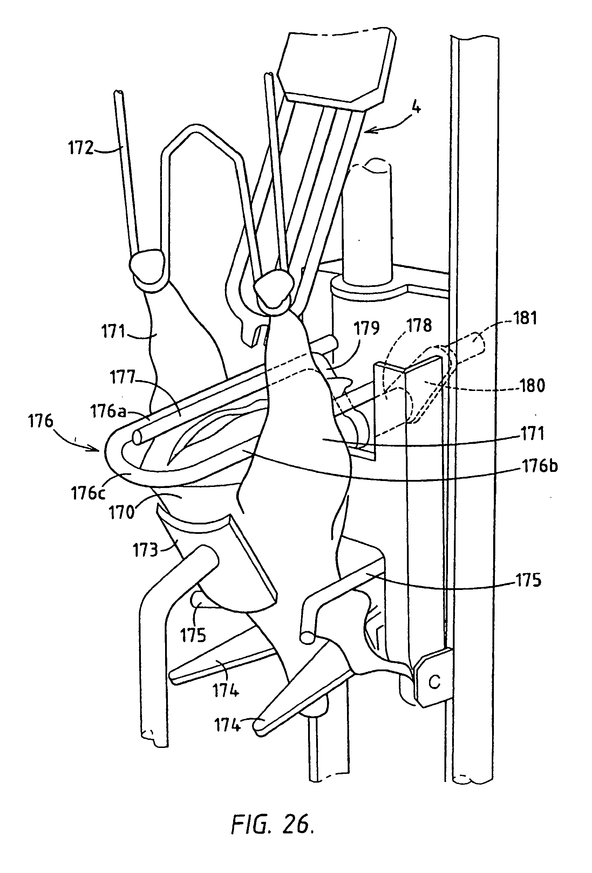

Fig. 26 reverts to a situation which can be brought about in a processing station of the device according to the invention prior to the drawing of the cluster of viscera from the carcass 170 of the slaughtered animal. The carcass 170 is hung by its legs 171 from a hook 172 of a conveyor (not shown in more detail) which is used to take the slaughtered animal past the processing station, the movement of each processing station, on the one hand, and the movement of the hook 172, on the other hand, being in the same direction and synchronized. The carcass 170 may be fixed in the processing station by one or more of the support means shown, namely a breast support 173, a neck support 174 and armpit supports 175. Between the legs 171 of the carcass 170, a mechanism 176, also referred to as a scraping/clamping mechanism or a clamping mechanism, is arranged close to or against the belly of the carcass 170, this mechanism comprising two limbs 176a, 176b, which lie opposite one another, and a curved connecting part 176c. It should be noted here that the limb 176a and the connecting part 176c are not essential to the functionality of the clamping mechanism which is to be described below and may, if appropriate, be omitted. The clamping mechanism 176 also comprises a rod 177 which lies close to or against the limb 176a and can be displaced, by means of rotation of a spindle 178, to which the rod 177 is connected via an arm 179, to close to or against the limb 176b for the purpose of operations which are to be discussed in more detail below. The rotation of the spindle 178 can be effected by a (freely rotating) wheel or cam 181, which is connected to the spindle 178 via an arm 180, being actuated in a suitable manner, which is known per se, for example with the aid of a known curved track control.

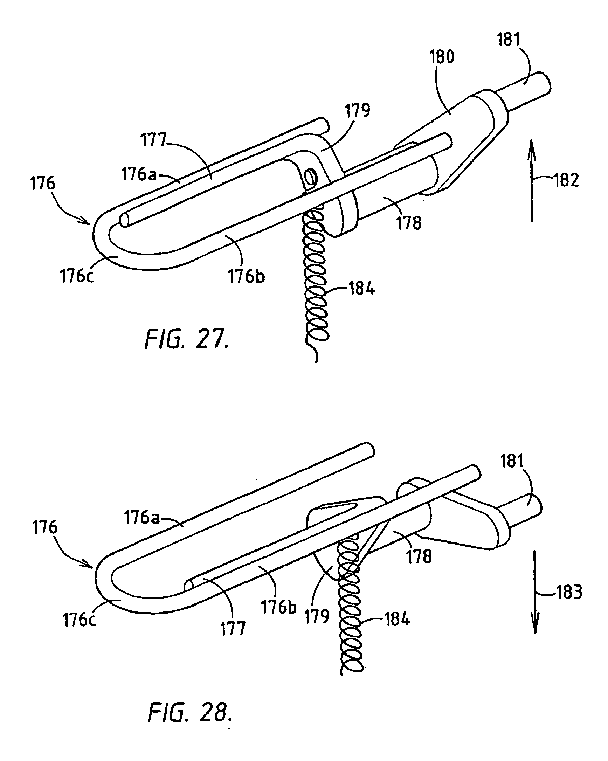

As shown in more detail in Figs. 27 and 28, the rod 177 can, as a result of the cam 181 being displaced in a single movement or continuously in the direction indicated by arrow 182, be displaced towards the limb 176a, and the rod 177 can be displaced, by displacement of the cam 181, in a single movement or continuously, in the direction indicated by arrow 183, towards the limb 176b. It is possible to provide a spring element 184 which, under the spring load, engages on one of the components 177, 179, 178, 180 or 181 and which ensures a defined force is used to drive the rod 177 in the direction of the limbs 176a or 176b. The limbs 176a and 176b may form an end stop for the rod 177, but it is also possible, particularly in the case of the limb 176a, for the stop function to be performed by a different element which acts on one of the components 177, 179, 178, 180 or 181. In Figs. 27 and 28, the spring element is represented as a helical tension spring 184, but it is also possible to use other spring elements which fulfil a similar function, such as for example coil springs.

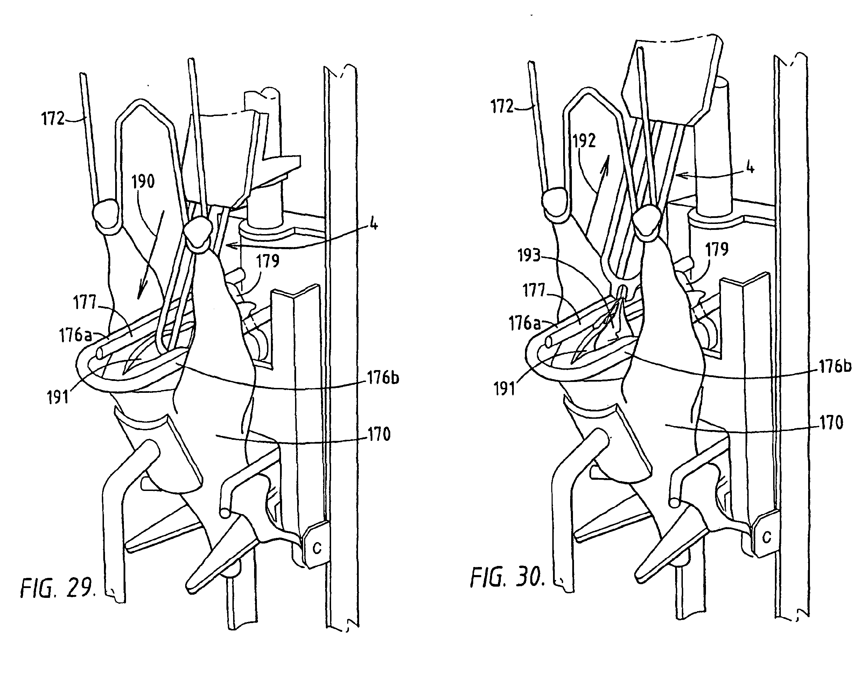

Fig. 29 illustrates how the drawing member 4 is moved into the carcass 170, in the direction indicated by arrow 190, via a drawing opening 191 which has previously been made, for the purpose of drawing the cluster of viscera out of the carcass 170. The rod 177 bears against the limb 176a of the clamping mechanism 176, and the drawing member 4 moves into the free area between the limbs 176a and 176b.

Fig. 30 illustrates the removal of the cluster of viscera 193 from the carcass 170 via the drawing opening 190, in the direction indicated by arrow 192, with the aid of the drawing member 4, sufficient space being available between the limbs 176a, 176b for this purpose. The cluster of viscera 193 is partly out of the carcass 170.

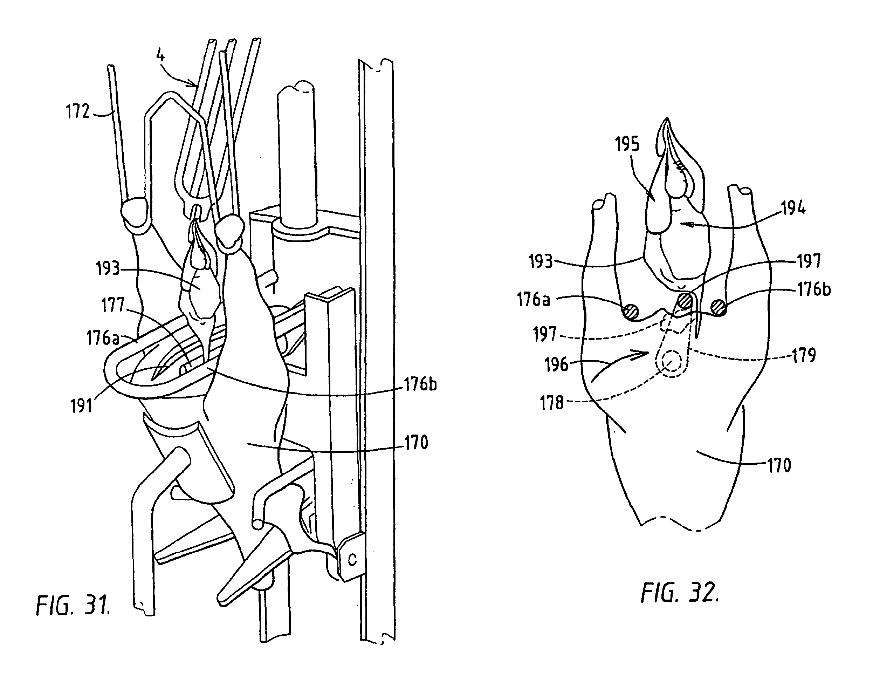

Fig. 31 illustrates a situation which follows the situation shown in Fig. 30 and in which the cluster of viscera 193 have been moved further out of the carcass 170 and the rod 177 has moved towards the limb 176b.

Fig. 32 illustrates the operation of the clamping mechanism 176 during the transition from the situation shown in Fig. 30 to the situation shown in Fig. 31. When the wall of the gizzard 194 of the cluster of viscera 193, and in particular the wall of the gizzard 194 below the liver 195, is situated, from the situation shown in Fig. 30, between the rod 177 and the limb 176b, the rod 177 is moved towards the limb 176b (arrow 196). As a result, the rod 177 and/or the limb 176b scrape over the cluster of viscera 193 in the area where there is fat on the wall of the gizzard 194, with the result that the fat 197 is at least partially removed from the gizzard wall in order for the fat 197 to be obtained separately. After the bottom section of the gizzard 194 has been reached in this way, the rod 177 is moved away again from the limb 176b, so that organs located beneath the gizzard 194, in particular the intestines, can pass between the rod 177 and the limb 176b.

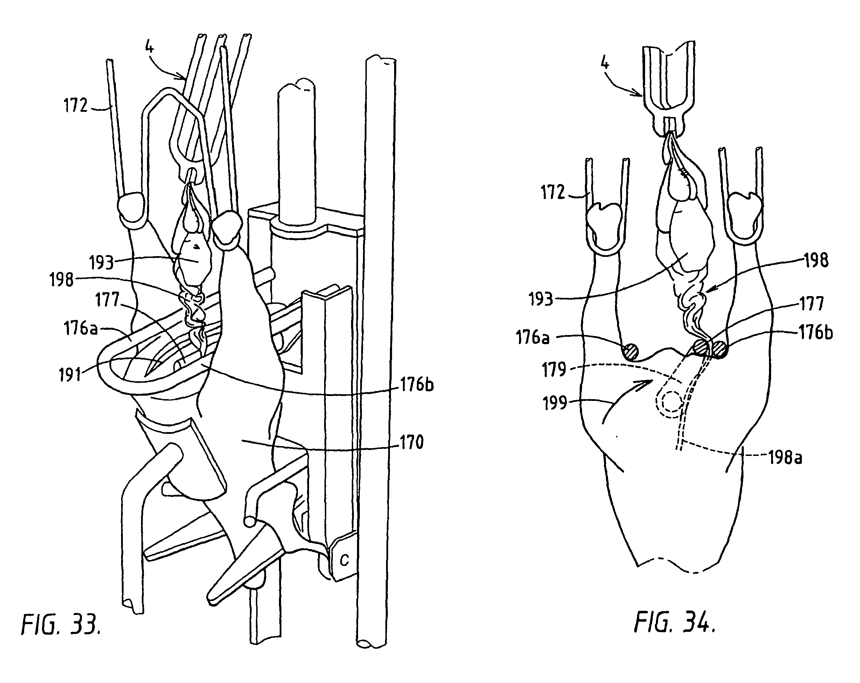

Fig. 33 illustrates another situation which follows the situation shown in Fig. 30 and in which the cluster of viscera 193 has been moved further out of the carcass 170 and the rod 177 has been moved towards the limb 176b.

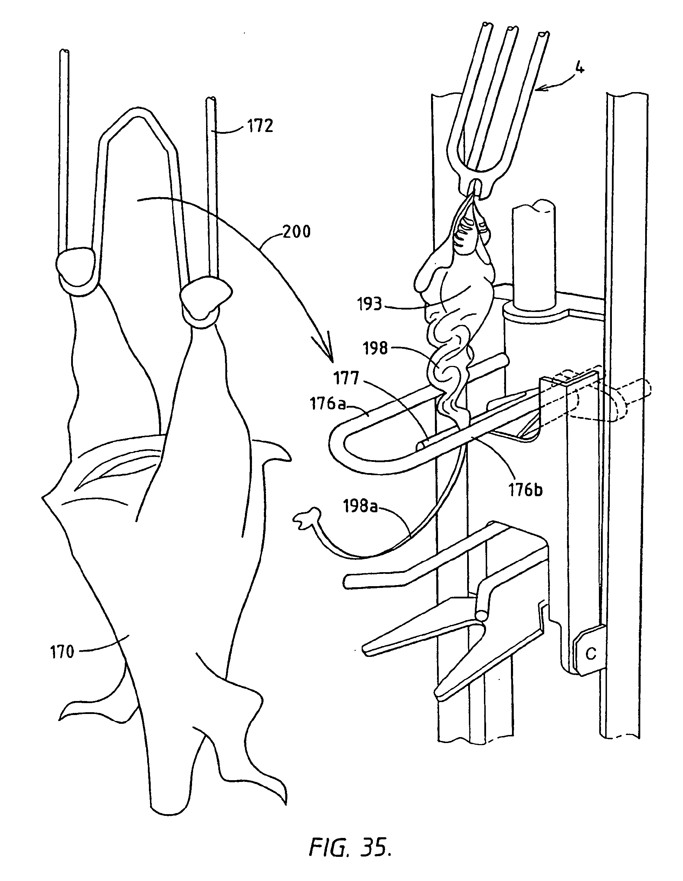

Fig. 34 illustrates the operation of the clamping mechanism 176 during the transition from the situation shown in Fig. 30 to the situation shown in Fig. 33. When a part 198a of the intestines 198 of the cluster of viscera 193 which is hanging freely, and in particular a part 198a of the intestines 198 which is situated below the cluster of intestines, which are held together with membranes and the like, is situated, starting from the position shown in Fig. 30, between the rod 177 and the limb 176b, the rod 177 is displaced towards the limb 176b (arrow 199). As a result, the said part 198a of the intestines 198 is clamped securely between the rod 177 and the limb 176b, and the cluster of intestines above it can no longer be exposed to forces which arise through residual adhesion of the part 198a of the intestines 198 situated beneath the location of clamping to the carcass 170. Consequently, if the drawing member 4 does not move away from the clamping mechanism 176, the cluster of intestines can remain as a cohesive unit and there is no risk of it being pulled out, for example when the carcass 170 moves away from the cluster of viscera 193 in the direction indicated by arrow 200, as illustrated in Fig. 35. In this way, the moment at which the intestines 198 are separated from the carcass 170 can be accurately defined. This also allows hygienic operation, since the intestines 198 as a whole, on account of the compact cluster of intestines, take up relatively little space, in particular in the vertical direction, and therefore the intestines 198 cannot come into contact with certain structural parts of the device of which the processing station forms part. After the intestines 198 have been separated from the carcass 170 in this way, the rod 177 is moved away from the limb 176a, with the result that the clamping on the intestines is eliminated and the cluster of viscera 193 can be processed further.

The clamping mechanism 176 can be used for the removal of gizzard fat described above, for the fixing of intestines described above or for both applications.

The methods and device components which have been described with reference to Figs. 26-35 take place substantially in the area between E1 and E2 which is shown in Fig. 2.

Although the device shown in the above figures is of the carousel type, with various components and tools located along the periphery of a rotating structure, it will be clear to the person skilled in the art that other arrangements of components and tools, such as a linear arrangement, can also provide the same functionality.

Furthermore, it should also be noted that the processing devices for carrying out processing operations on a cluster of viscera which have been described with reference to Figs. 5-35 can also be used, independently of one another, outside the scope of the present invention, in devices according to the prior art and other devices which will be developed in the future.

## Claims

1. Method for processing a cluster of viscera of a slaughtered animal, comprising:
drawing at least part of the cluster of viscera out of the slaughtered animal with a drawing member; and
inspecting the cluster of viscera,
**characterized in that** the inspecting takes place when the drawing member is supporting the cluster of viscera.

2. Method according to claim 1, in which, during the inspection, the cluster of viscera is removed from the slaughtered animal at least until the heart, liver and lungs are visible.

3. Method according to claim 1 or 2, in which the cluster of viscera is fixed at least at one location during inspection thereof.

4. Method according to claim 3, in which the drawing member is adapted to fix the viscera.

5. Method according to claim 4, in which a separating device is arranged along the path of the drawing member, a cluster of viscera being detached from the drawing member with the aid of the separating device if the cluster of viscera are rejected.

6. Method according to any of the preceding claims 1-5, in which the position of the cluster of viscera during the inspection thereof remains substantially constant, as seen in the vertical direction.

7. Method according to any of the preceding claims 1-5, in which movement of the cluster of viscera in the drawing member is interrupted during the inspection.

8. Method according to any of the preceding claims 1-7, in which a cluster of viscera and/or a carcass is inspected and, if the cluster of viscera and/or the carcass is rejected, the carcass is removed from the conveyor path thereof, after which, on the basis of the absence from the conveyor path of the carcass, the cluster of viscera is removed.

9. Method according to claim 1, wherein the method further comprises the step of separating of an organ or a part of an organ or the tissue connected thereto from the cluster of viscera.

10. Method according to claim 9, in which the cluster of viscera is fixed at least at one location during the separation.

11. Method according to claim 10, in which the drawing member is adapted to fix the viscera.

12. Method according to claim 10 or 11, in which the cluster of viscera is fixed at the location of at least one connection between the heart and lungs, on the one hand, and the liver, on the other hand.

13. Method according to claim 12, in which said fixing is achieved by passing the said connection into a gap between parallel guides.

14. Method according to any of claims 9-13, in which the liver is separated from the cluster of viscera by exerting scraping forces, which are directed away from the drawing member, on the liver.

15. Method according to any of claims 9-14, in which the lungs are separated from the cluster of viscera before the heart is separated from the cluster of viscera.

16. Method according to any of claims 9-15, in which the lungs are separated from the cluster of viscera before the remaining organs are separated from the cluster of viscera.

17. Method according to any of claims 9-16, in which the lungs are separated from the cluster of viscera by sucking the lungs onto or into a suction member, the lungs being moved away from the cluster of viscera, and then breaking one or more connections between the lungs and the remainder of the cluster of viscera.

18. Method according to any of claims 9-16, in which the lungs are separated from the cluster of viscera by taking hold of the lungs by means of a gripper and moving them away from the cluster of viscera, and then breaking one or more connections between the lungs and the remainder of the cluster of viscera.

19. Method according to any of claims 9-16, in which the lungs are separated from the cluster of viscera by moving the lungs away from the cluster of viscera with the aid of a support and then breaking one or more connections between the lungs and the remainder of the cluster of viscera.

20. Method according to any of claims 15-19, in which the lungs are processed into pieces after they have been separated from the cluster of viscera.

21. Method according to any of claims 9-20, in which the heart is separated from the cluster of viscera by bringing at least one side thereof into contact with a support and then breaking one or more connections between the heart and the remainder of the cluster of viscera.

22. Method according to any of claims 9-21, in which a scraper is moved along at least part of the gizzard in order to scrape off attached fat.

23. Method according to claim 22, in which the scraping takes place while the cluster of viscera is being drawn out of the slaughtered animal.

24. Method according to any of claims 9-23, in which, while the cluster of viscera is being drawn out of the slaughtered animal, the intestines are supported, in order to relieve the mechanical load on a part of the intestines which is already situated outside the slaughtered animal and has been detached therefrom.

25. Device for processing a cluster of viscera of a slaughtered animal, comprising:
at least one drawing member for drawing at least part of the cluster of viscera out of the slaughtered animal; and
processing means for inspecting the cluster of viscera,
**characterized in that** the processing means are arranged in the vicinity of the at least one drawing member and are operable to carry out the process step when the drawing member is supporting the cluster of viscera.

26. Device according to claim 25, wherein the processing means comprise inspection means for inspecting the cluster of viscera.

27. Device according to claim 26, which comprises a number of drawing members which are arranged on a common moving structure in order for the drawing members to be moved along a predetermined path, the inspection means being arranged along the abovementioned path.

28. Device according to claim 26 or 27 in which the inspection means comprise an image-recording device.

29. Device according to claim 26, wherein the processing means comprise separating means for separating an organ or part of an organ or tissue connected thereto from the cluster of viscera.

30. Device according to claim 29, which comprises a number of drawing members which are arranged on a common moving structure for the purpose of moving the drawing members along a predetermined path, the separating means being arranged along the abovementioned path.

31. Device according to claim 27 or 30, in which the said path is circular.

32. Device according to any of claims 29-31, in which the separating means comprise organ-scraping means for scraping at least one of the organs off the cluster of viscera.

33. Device according to any of claims 29-32, in which the separating means comprise an organ-sucking device for sucking up at least one of the organs from the cluster of viscera and moving the said at least one of the organs to a distance from the cluster of viscera.

34. Device according to any of claims 29-32, in which the separating means comprise an organ support for moving at least one of the organs of the cluster of viscera to a distance from the cluster of viscera.

35. Device according to any of claims 29-32, in which the separating means comprise an organ-gripping device for moving at least one of the organs of the cluster of viscera to a distance from the cluster of viscera.

36. Device according to any of claims 29-35, in which the separating means comprise a separation device for separating connective tissue between at least one organ of the cluster of viscera and the remainder of the cluster of viscera.

37. Device according to any of claims 29-36, in which the separating means comprise a scraping device for scraping fat off the gizzard.

38. Device according to claim 37, in which the scraping device comprises at least one scraper bar which is adapted to act in the vicinity of an evisceration opening of the slaughtered animal.

39. Device according to any of claims 29-38, in which the separating means comprise a support device for supporting a part of the intestines of the cluster of viscera which is situated outside the slaughtered animal.

40. Device according to claim 39, in which the support device is a clamping device for clamping a part of the intestines.

41. Device according to claim 39 or 40, in which the support device is adapted to act in the vicinity of an evisceration opening of the slaughtered animal.

## Patentansprüche

1. Verfahren zum Bearbeiten eines Organpaketes eines Schlachttieres, mit folgenden Schritten:
Herausziehen zumindest eines Teiles des Organpaketes aus dem Schlachttier mit einem Zugelement; und
das Organpaket inspizieren,
**dadurch gekennzeichnet, dass** das inspizieren stattfindet, wenn das Zugelement das Organpaket trägt.

2. Verfahren nach Anspruch 1, bei dem während des Inspizierens das Organpaket aus dem Schlachttier entfernt wird, zumindest bis das Herz, die Leber und die Lungen sichtbar sind.

3. Verfahren nach Anspruch 1 oder 2, bei dem das Organpaket während des Inspizierens zumindest an einem Ort fixiert wird.

4. Verfahren nach Anspruch 3, bei dem das Zugelement ausgebildet ist, um das Organpaket zu fixieren.

5. Verfahren nach Anspruch 4, bei dem eine Trenneinrichtung längs des Weges des Zugelements angeordnet ist und ein Organpaket von dem Zugelement mit Hilfe der Trenneinrichtung gelöst wird, wenn das Organpaket verworfen wird.

6. Verfahren nach einem der vorherigen Ansprüche 1 bis 5, bei dem die Position des Organpakets während des Inspizierens in vertikaler Richtung im Wesentlichen konstant gehalten wird.

7. Verfahren nach einem der vorherigen Ansprüche 1 bis 5, bei dem die Bewegung des Organpakets in dem Zugelement während des Inspizierens unterbrochen wird.

8. Verfahren nach einem der vorherigen Ansprüche 1 bis 7, bei dem ein Organpaket und/oder eine Karkasse inspiziert wird und dann, wenn das Organpaket und/oder die Karkasse verworfen wird, aus dem Förderweg entfernt wird, wonach dann, wenn der Förderweg für die Karkasse nicht belegt ist, das Organpaket entfernt wird.

9. Verfahren nach Anspruch 1, bei dem das Verfahren auch der Schritt das Abtrennen eines Organs oder eines Teils eines Organs oder des damit verbundenen Gewebes von dem Organpaket umfasst.

10. Verfahren nach Anspruch 9, wobei das Organpaket während des Abtrennens zumindest an einem Ort fixiert wird.

11. Verfahren nach Anspruch 10, bei dem das Zugelement ausgebildet ist, um das Organpaket zu fixieren.

12. Verfahren nach Anspruch 10 oder 11, bei dem das Organpaket an dem Ort von zumindest einer Verbindung einerseits zwischen dem Herz und der Lunge und andererseits der Leber fixiert wird.

13. Verfahren nach Anspruch 12, bei dem das Fixieren erzielt wird, indem die Verbindung in einen Spalt zwischen parallelen Führungen hindurchgeführt wird.

14. Verfahren nach einem der Ansprüche 9 bis 13, wobei die Leber von dem Organpaket abgetrennt wird, indem auf die Leber Abstreifkräfte ausgeübt werden, die weg von dem Zugelement gerichtet sind.

15. Verfahren nach einem der Ansprüche 9 bis 14, bei dem die Lungen von dem Organpaket abgetrennt werden, bevor das Herz von dem Organpaket abgetrennt wird.

16. Verfahren nach einem der Ansprüche 9 bis 15, bei dem die Lungen von dem Organpaket abgetrennt werden, bevor die restlichen Organe von dem Organpaket abgetrennt werden.

17. Verfahren nach einem der Ansprüche 9 bis 16, bei dem die Lungen von dem Organpaket abgetrennt werden, indem die Lungen an oder in ein Saugelement gesaugt werden, wobei die Lungen weg von dem Organpaket bewegt werden, und anschließend eine oder mehrere Verbindungen zwischen den Lungen und dem restlichen Organpaket aufgebrochen werden.

18. Verfahren nach einem der Ansprüche 9 bis 16, bei dem die Lungen von dem Organpaket abgetrennt werden, indem die Lungen mit Hilfe eines Greifers gehalten und von dem Organpaket wegbewegt werden, und anschließend eine oder mehrere Verbindungen zwischen den Lungen und dem restlichen Organpaket aufgebrochen werden.

19. Verfahren nach einem der Ansprüche 9 bis 16, bei dem die Lungen von dem Organpaket abgetrennt werden, indem die Lungen weg von dem Organpaket mit Hilfe einer Halteeinrichtung bewegt werden und anschließend eine oder mehrere Verbindungen zwischen den Lungen und dem restlichen Organpaket aufgebrochen werden.

20. Verfahren nach einem der Ansprüche 15 bis 19, bei dem die Lungen in Stücke geteilt werden, nachdem sie von dem Organpaket abgetrennt worden sind.

21. Verfahren nach einem der Ansprüche 9 bis 20, bei dem das Herz von dem Organpaket abgetrennt wird, indem zumindest eine Seite des Herzes in Kontakt mit einer Halteeinrichtung gebracht wird und anschließend eine oder mehrere Verbindungen zwischen dem Herzen und dem restlichen Organpaket aufgebrochen werden.

22. Verfahren nach einem der Ansprüche 9 bis 21, bei dem ein Abstreifer längs zumindest eines Teiles des Muskelmagens bewegt wird, um daran anhaftendes Fett abzustreifen.

23. Verfahren nach Anspruch 22, bei dem das Abstreifen stattfindet, während das Organpaket aus dem Schlachttier herausgezogen wird.

24. Verfahren nach einem der Ansprüche 9 bis 23, bei dem während des Herausziehens des Organpakets aus dem Schlachttier die Därme abgestützt werden, um die mechanische Belastung auf einen Teil der Därme, der bereits außerhalb des Schlachttiers gelegen und davon gelöst worden ist, zu verringern.

25. Vorrichtung zum Bearbeiten eines Organpakets eines Schlachttiers mit:
zumindest einem Zugelement zum Herausziehen zumindest eines Teiles des Organpakets aus dem Schlachttier; und
Bearbeitungseinrichtungen zum Inspizieren des Organpakets,
**dadurch gekennzeichnet, dass** die Bearbeitungseinrichtungen in der Nähe des zumindest einen Zugelements angeordnet sind und bewegbar sind, um den Bearbeitungsschritt auszuführen, wenn das Zugelement das Organpaket trägt.

26. Vorrichtung nach Anspruch 25, wobei die Bearbeitungseinrichtungen Inspektionseinrichtungen zum Inspizieren des Organpakets aufweisen.

27. Vorrichtung nach Anspruch 26, die eine Anzahl von Zugelementen aufweist, die an einer gemeinsamen Transportstruktur angeordnet sind, um die Zugelemente längs eines vorbestimmten Weges zu bewegen, wobei die Inspektionseinrichtungen längs des erwähnten Weges angeordnet sind.

28. Vorrichtung nach Anspruch 26 oder 27, wobei die Inspektionseinrichtungen eine Bildaufzeichnungseinrichtung aufweisen.

29. Vorrichtung nach Anspruch 26, wobei die Bearbeitungseinrichtungen Abtrenneinrichtungen aufweisen, um ein Organ oder einen Teil eines Organs oder von damit verbundenem Gewebe von dem Organpaket abzutrennen.

30. Vorrichtung nach Anspruch 29, wobei eine Anzahl von Zugelementen vorgesehen ist, die an einem gemeinsamen Transportweg angeordnet sind, um die Zugelemente längs eines vorbestimmten Weges zu bewegen, wobei die Abtrenneinrichtungen längs des erwähnten Weges angeordnet sind.

31. Vorrichtung nach Anspruch 27 oder 30, wobei dieser Weg kreisförmig ist.

32. Vorrichtung nach einem der Ansprüche 29 bis 31, wobei die Trenneinrichtung organabstreifende Einrichtungen aufweist, um zumindest eines der Organe von dem Organpaket abzustreifen.

33. Vorrichtung nach einem der Ansprüche 29 bis 32, wobei die Abstreifeinrichtungen eine organansaugende Einrichtung aufweisen, um zumindest eines der Organe von dem Organpaket abzusaugen und dieses zumindest eine Organ an einen Ort entfernt von dem Organpaket zu bewegen.

34. Vorrichtung nach einem der Ansprüche 29 bis 32, wobei die Abtrenneinrichtungen einen Organträger aufweisen, um zumindest eines der Organe des Organpakets an einen Ort entfernt von dem Organpaket zu bewegen.

35. Vorrichtung nach einem der Ansprüche 29 bis 32, wobei die Abtrenneinrichtungen eine Greifeinrichtung für ein Organ aufweisen, um zumindest eines der Organe des Organpakets an einen Ort entfernt von dem Organpaket zu bewegen.

36. Vorrichtung nach einem der Ansprüche 29 bis 35, wobei die Abtrenneinrichtungen eine Abtrenneinrichtung zum Abtrennen verbindenden Gewebes zwischen zumindest einem Organ des Organpakets und dem restlichen Organpaket abzutrennen.

37. Vorrichtung nach einem der Ansprüche 29 bis 36, wobei die Abtrenneinrichtungen eine Abstreifeinrichtung zum Abstreifen von Fett von dem Muskelmagen aufweisen.

38. Vorrichtung nach Anspruch 37, wobei die Abstreifeinrichtung zumindest einen Abstreifstab aufweist, der ausgelegt ist, um in der Nähe einer Ausweidungsöffnung des Schlachttiers betätigt zu werden.

39. Vorrichtung nach einem der Ansprüche 29 bis 38, wobei die Abtrenneinrichtungen eine Trageinrichtung zum Tragen eines Teiles der Därme des Organpakets aufweisen, die außerhalb des Schlachttiers gelegen ist.

40. Vorrichtung nach Anspruch 39, wobei die Trageinrichtung eine Klemmeinrichtung ist, um einen Teil des Darmes einzuklemmen.

41. Vorrichtung nach Anspruch 39 oder 40, wobei die Trageinrichtung ausgelegt ist, um in der Nähe einer Ausweidungsöffnung des Schlachttiers betätigt zu werden.

## Revendications

1. Procédé permettant de traiter un paquet de viscères d'un animal abattu, comprenant les étapes consistant à :
extraire au moins une partie du paquet de viscères hors de l'animal abattu avec un élément d'extraction ; et
contrôler du paquet de viscères ,
**caractérisé en ce que** le contrôle a lieu lorsque l'élément d'extraction supporte le paquet de viscères.

2. Procédé selon la revendication 1, dans lequel pendant le contrôle, le paquet de viscères est retiré de l'animal abattu au moins jusqu'à ce que le coeur, le foie et les poumons soient visibles.

3. Procédé selon la revendication 1 ou 2, dans lequel le paquet de viscères est fixé au moins à un emplacement pendant son contrôle.

4. Procédé selon la revendication 3, dans lequel l'élément d'extraction est adapté pour fixer les viscères.

5. Procédé selon la revendication 4, dans lequel un dispositif de séparation est agencé le long du trajet de l'élément d'extraction, un paquet de viscères étant détaché de l'élément d'extraction à l'aide du dispositif de séparation si le paquet de viscères est rejeté.

6. Procédé selon l'une quelconque des revendications précédentes 1 à 5, dans lequel la position du paquet de viscères pendant son contrôle reste sensiblement constante, comme on le voit dans la direction verticale.

7. Procédé selon l'une quelconque des revendications précédentes 1 à 5, dans lequel le mouvement du paquet de viscères dans l'élément d'extraction est interrompu pendant le contrôle.

8. Procédé selon l'une quelconque des revendications précédentes 1 à 7, dans lequel un paquet de viscères et/ou une carcasse sont contrôlés et, si le paquet de viscères et/ou la carcasse sont rejetés, la carcasse est retirée de son trajet de transport, après quoi, sur la base de l'absence du trajet de transport de la carcasse, le paquet de viscères est retiré.

9. Procédé selon la revendication 1, lequel procédé aussi comprends l'étape de la séparation d'un organe ou d'une partie d'un organe ou tissu raccordée à celui-ci, du paquet de viscères.

10. Procédé selon la revendication 9, dans lequel le paquet de viscères est fixé au moins à un emplacement pendant la séparation.

11. Procédé selon la revendication 10, dans lequel l'élément d'extraction est adapté pour fixer les viscères.

12. Procédé selon la revendication 10 ou 11, dans lequel le paquet de viscères est fixé à l'emplacement d'au moins un raccordement entre le coeur et les poumons, d'une part et le foie d'autre part.

13. Procédé selon la revendication 12, dans lequel ladite fixation est obtenue en faisant passer ledit raccordement dans un espace situé entre des guides parallèles.

14. Procédé selon l'une quelconque des revendications 9 à 13, dans lequel le foie est séparé du paquet de viscères en exerçant des forces de raclage, qui sont dirigées à distance de l'élément d'extraction, sur le foie.

15. Procédé selon l'une quelconque des revendications 9 à 14, dans lequel les poumons sont séparés du paquet de viscères avant que le coeur soit séparé du paquet de viscères.

16. Procédé selon l'une quelconque des revendications 9 à 15, dans lequel les poumons sont séparés du paquet de viscères avant que les organes restants soient séparés du paquet de viscères.

17. Procédé selon l'une quelconque des revendications 9 à 16, dans lequel les poumons sont séparés du paquet de viscères en aspirant les poumons sur ou dans un élément d'aspiration, les poumons étant éloignés du paquet de viscères et ensuite en cassant un ou plusieurs raccordements entre les poumons et le reste du paquet de viscères.

18. Procédé selon l'une quelconque des revendications 9 à 16, dans lequel les poumons sont séparés du paquet de viscères en saisissant les poumons au moyen d'une pince et en les éloignant du paquet de viscères et ensuite en cassant un ou plusieurs raccordements entre les poumons et le reste du paquet de viscères.

19. Procédé selon l'une quelconque des revendications 9 à 16, dans lequel les poumons sont séparés du paquet de viscères en éloignant les poumons du paquet de viscères à l'aide d'un support et ensuite en cassant un ou plusieurs raccordements entre les poumons et le reste du paquet de viscères.

20. Procédé selon l'une quelconque des revendications 15 à 19, dans lequel les poumons sont traités en morceaux après qu'ils aient été séparés du paquet de viscères.

21. Procédé selon l'une quelconque des revendications 9 à 20, dans lequel le coeur est séparé du paquet de viscères en amenant au moins son côté en contact avec un support et ensuite en cassant un ou plusieurs raccordements entre le coeur et le reste du paquet de viscères.

22. Procédé selon l'une quelconque des revendications 9 à 21, dans lequel un racleur est déplacé le long d'au moins une partie du gésier afin de racler le gras fixé.

23. Procédé selon la revendication 22, dans lequel le raclage a lieu alors que le paquet de viscères est extrait de l'animal abattu.

24. Procédé selon l'une quelconque des revendications 9 à 23, dans lequel alors que le paquet de viscères est extrait de l'animal abattu, les intestins sont supportés, afin de réduire la charge mécanique sur une partie des intestins qui est déjà située à l'extérieur de l'animal abattu et a été détachée de celui-ci.

25. Dispositif permettant de traiter un paquet de viscères d'un animal abattu, comprenant :
au moins un élément d'extraction pour extraire au moins une partie du paquet de viscères hors de l'animal abattu ; et
des moyens de traitement pour le contrôle du paquet de viscères,
**caractérisé en ce que** les moyens de traitement sont agencés à proximité du au moins un élément d'extraction et peuvent fonctionner pour réaliser l'étape de traitement lorsque l'élément d'extraction supporte le paquet de viscères.

26. Dispositif selon la revendication 25, dans lequel les moyens de traitement comprennent des moyens de contrôle pour contrôler le paquet de viscères.

27. Dispositif selon la revendication 26, qui comprend un certain nombre d'éléments d'extraction qui sont agencés sur une structure mobile commune afin de déplacer les éléments d'extraction le long d'un trajet prédéterminé, les moyens de contrôle étant agencés le long du trajet mentionné ci-dessus.

28. Dispositif selon la revendication 26 ou 27, dans lequel les moyens de contrôle comprennent un dispositif d'enregistrement d'image.

29. Dispositif selon la revendication 26, dans lequel les moyens de traitement comprennent des moyens de séparation pour séparer un organe ou une partie d'un organe ou tissu raccordé à celui-ci, du paquet de viscères.

30. Dispositif selon la revendication 29, qui comprend un certain nombre d'éléments d'extraction qui sont agencés sur une structure mobile commune afin de déplacer les éléments d'extraction le long d'un trajet prédéterminé, les moyens de séparation étant agencés le long du trajet mentionné ci-dessus.

31. Dispositif selon la revendication 27 ou 30, dans lequel ledit trajet est circulaire.

32. Dispositif selon l'une quelconque des revendications 29 à 31, dans lequel les moyens de séparation comprennent des moyens de raclage d'organe pour racler au moins l'un des organes du paquet de viscères.

33. Dispositif selon l'une quelconque des revendications 29 à 32, dans lequel les moyens de séparation comprennent un dispositif d'aspiration d'organe pour aspirer au moins l'un des organes du paquet de viscères et déplacer ledit au moins un des organes à une certaine distance du paquet de viscères.

34. Dispositif selon l'une quelconque des revendications 29 à 32, dans lequel les moyens de séparation comprennent un support d'organe pour déplacer au moins l'un des organes du paquet de viscères à une certaine distance du paquet de viscères.

35. Dispositif selon l'une quelconque des revendications 29 à 35, dans lequel les moyens de séparation comprennent un dispositif de prise d'organe pour déplacer au moins l'un des organes du paquet de viscères à une certaine distance du paquet de viscères.

36. Dispositif selon l'une quelconque des revendications 29 à 35, dans lequel les moyens de séparation comprennent un dispositif de séparation pour séparer le tissu conjonctif entre au moins un organe du paquet de viscères et le reste du paquet de viscères.

37. Dispositif selon l'une quelconque des revendications 29 à 36, dans lequel les moyens de séparation comprennent un dispositif de raclage pour racler le gras du gésier.

38. Dispositif selon la revendication 37, dans lequel le dispositif de raclage comprend au moins une barre de raclage qui est adaptée pour agir à proximité d'une ouverture d'éviscération de l'animal abattu.

39. Dispositif selon l'une quelconque des revendications 29 à 38, dans lequel les moyens de séparation comprennent un dispositif de support pour supporter une partie des intestins du paquet de viscères qui est située à l'extérieur de l'animal abattu.

40. Dispositif selon la revendication 39, dans lequel le dispositif de support est un dispositif de serrage pour serrer une partie des intestins.

41. Dispositif selon la revendication 39 ou 40, dans lequel le dispositif de support est adapté pour agir à proximité d'une ouverture d'éviscération de l'animal abattu.
